# EUROPÄISCHE PATENTSCHRIFT

(11) **EP 3 020 532 B1**
(45) Veröffentlichungstag und Bekanntmachung des Hinweises auf die Patenterteilung: **11.08.2021**
(21) Anmeldenummer: 15192530.2
(22) Anmeldetag: 02.11.2015
(51) Int. Cl.: B29C 65/14, B29C 65/06, B29C 65/78

(54) **KUNSTSTOFFSCHWEISSVORRICHTUNG SOWIE DAZUGEHÖRIGES KUNSTSTOFFSCHWEISSVERFAHREN**
PLASTIC WELDING DEVICE AND CORRESPONDING PLASTIC WELDING METHOD
DISPOSITIF DE SOUDAGE DE MATIERE SYNTHETIQUE ET PROCEDE DE SOUDAGE DE MATIERE SYNTHETIQUE ASSOCIE

(30) Priorität: 12.11.2014 DE 102014223121
(43) Veröffentlichungstag der Anmeldung: 18.05.2016
(73) Patentinhaber: Branson Ultraschall Niederlassung der Emerson Technologies GmbH & Co. oHG, 63128 Dietzenbach (DE)
(72) Erfinder: Fuchs, Silvio, 63594 Hasselroth (DE)
(74) Vertreter: HWP Intellectual Property

(56) Entgegenhaltungen:
- EP-A1- 2 450 165
- WO-A1-2013/004279
- DE-U1-202005 007 282
- DE-U1-202011 003 610
- None

## Beschreibung

Die vorliegende Erfindung betrifft eine Kunststoffschweißvorrichtung sowie ein dazugehöriges Kunststoffschweißverfahren.

Kunststoffschweißvorrichtungen umfassen üblicherweise ein Gehäuse mit einem darin angeordneten Unterwerkzeug sowie einem darin angeordneten Oberwerkzeug. Das Unterwerkzeug ist an einem Hubtisch befestigt, wohingegen das Oberwerkzeug starr an einer Oberwerkzeugplatte befestigt ist. Weiterhin umfassen solche bekannten Kunststoffschweißvorrichtungen eine Vorwärmanordnung, um das erste und das zweite Bauteil vor dem Verschweißen zu erwärmen. Üblicherweise ist die Vorwärmanordnung hierbei an den Hubtisch gekoppelt. Mittels des Hubtischs kann das Unterwerkzeug in Richtung des Oberwerkzeugs verfahren werden, um ein erstes Bauteil im Unterwerkzeug mit einem zweiten Bauteil im Oberwerkzeug zu verschweißen, insbesondere mittels Reibschweißen.

Derartige Kunststoffvorrichtungen werden zum Beispiel in der Automobilindustrie oder in der Medizintechnik eingesetzt. In der Automobilindustrie werden solche Kunststoffschweißvorrichtungen zur Herstellung von Leuchten eingesetzt, können aber auch bei der Herstellung anderer Bauteile oder Bauteilgruppen genutzt werden, die aus Kunststoff bestehen oder Kunststoffe enthalten. In ähnlicher Weise kann die Kunststoffschweißvorrichtung bei der Herstellung von Geräten und/oder Bauteilgruppen in der Medizintechnik oder bei der Herstellung von Konsumgütern Verwendung finden.

Der Arbeitsablauf bei der bekannten Kunststoffschweißvorrichtung mit Vorwärmanordnung ist wie folgt. Ein Bediener legt zunächst ein erstes Bauteil auf das Unterwerkzeug. Anschließend positioniert er ein zweites Bauteil auf dem ersten Bauteil im Unterwerkzeug. Dann fährt der Hubtisch mit dem Unterwerkzeug und den darauf angeordneten Bauteilen aus einer Anfangsposition in Richtung des Oberwerkzeugs, bis das zweite Bauteil im Oberwerkzeug anliegt. Diese Bewegung erfolgt entlang nur einer Achse, die bezogen auf einen Boden, auf dem die Kunststoffschweißvorrichtung angeordnet ist, vertikal verläuft. Anschließend fährt der Hubtisch entlang dieser vertikalen Achse zurück in eine Zwischenposition, in der die Vorwärmanordnung aus einer Ruheposition in eine Ausrichtposition zwischen den Bauteilen angeordnet werden kann. Nachdem die Vorwärmanordnung zwischen den beiden Bauteilen angeordnet wurde, wird durch ein erneutes vertikales Verfahren des Hubtischs die Vorwärmanordnung in einer Vorwärmposition so positioniert, dass die beiden Bauteile an den zu verschweißenden Stellen erwärmbar sind. Nach dem Erwärmen wird der Hubtisch entlang der vertikalen Achse wieder in die Zwischenposition verfahren und somit die Vorwärmanordnung zurück in die Ausrichtposition. Nachdem die Vorwärmanordnung dann zurück in die Ruheposition gefahren wurde wird der Hubtisch entlang der vertikalen Achse in eine Schweißposition verfahren.

Nun erfolgt ein Verschweißen des ersten Bauteils mit dem zweiten Bauteil mittels Reibschweißen oder mittels Aneinanderdrücken der vorgewärmten Bauteile. Nach Beendigung des Verschweißens fährt der Hubtisch mit dem Unterwerkzeug und dem darin angeordneten Verbund aus erstem und zweitem Bauteil entlang der vertikalen Achse von der Schweißposition zurück in die Anfangsposition. Sobald der Hubtisch die Anfangsposition erreicht hat kann der Bediener dann den Verbund aus erstem und zweitem Bauteil entnehmen.

Ein Nachteil der oben beschriebenen Kunststoffschweißvorrichtung mit Vorwärmanordnung wird ersichtlich, wenn Bauteile mit komplexen Vorsprüngen bzw. Hinterschnitten erwärmt und verschweißt werden sollen. Ein Vorsprung bzw. Hinterschnitt ergibt sich beim Reibschweißen insbesondere aufgrund der nicht beliebig veränderbaren Winkellage der zu verschweißenden Bauteile zueinander. Insbesondere müssen die beiden Bauteile in das jeweilige Werkzeug derart eingebracht werden, dass eine Reibschweißkraft wirksam auf den Fügebereich des jeweiligen Bauteils übertragen wird. Aufgrund dieser nicht frei bestimmbaren Winkellage der beiden Bauteile zueinander sowie der Verfahrbarkeit der Werkzeuge ausschließlich entlang der vertikalen Achse ergeben sich abhängig von den zu verschweißenden Bauteilen Hinterschnitte bzw. Vorsprünge. Diese würden bei einem Verfahren entlang der vertikalen Achse zu einer Beschädigung und/oder Zerstörung von mindestens einem der Bauteile und/oder einem der Werkzeuge oder der Vorwärmanordnung führen.

Zur Beseitigung dieses Nachteils wurde im Bereich des Reibschweißens von der Firma BRANSON daher eine Kunststoffschweißvorrichtung entwickelt, deren Unterwerkzeug auf dem Hubtisch beliebig im Raum verfahrbar ist, insbesondere entlang einer Steuerlinie. Eine Bewegung des Oberwerkzeugs ist aufgrund der beim Vibrationsschweißen bzw. Reibschweißen auftretenden Kräfte nicht möglich und daher nicht vorgesehen.

Allerdings weist diese bekannte Kunststoffschweißvorrichtung keine Vorwärmanordnung auf. Darüber hinaus verfahren alle auf dem Hubtisch angeordneten Werkzeuge gleichermaßen, also insbesondere in die gleiche Richtung. Dies kann am Beispiel eines Schiebetischs verdeutlicht werden, der auf dem Hubtisch angeordnet ist. Während der Hubtisch eine Bewegung entlang der vertikalen Achse ermöglicht, ermöglicht der Schiebetisch eine Bewegung entlang einer Achse innerhalb der x,y-Ebene. In der Praxis ermöglicht der Schiebetisch bezogen auf eine Öffnung der Kunststoffschweißvorrichtung eine gleichzeitige Bewegung nach vorne, also hin zum Bediener, oder nach hinten, also weg vom Bediener, für alle darauf angeordneten Werkzeuge. Eine solche Ansteuerung der Werkzeuge erfordert jedoch mindestens drei Antriebe, einen für die vertikale Richtung und zwei für das Verfahren in der Ebene. Weiterhin ist die abgestimmte Ansteuerung der jeweiligen Antriebe komplex, was die Steuerung insgesamt kostenintensiv gestaltet.

Weiterhin ist die bekannte Kunststoffschweißvorrichtung nicht zur Verwendung beim Verschweißen von zwei spiegelsymmetrisch auf den Unterwerkzeugen angeordneten Bauteilen geeignet. Die Verwendung der bekannten Vorrichtung würde insbesondere beim gleichzeitigen Verschweißen von zwei spiegelsymmetrisch angeordneten Bauteilen mit komplexen Vorsprüngen bzw. Hinterschnitten weiterhin zur Beschädigung oder Zerstörung mindestens eines der Bauteile und/oder der Vorwärmanordnung bzw. mindestens einer Vorwärmvorrichtung der Vorwärmanordnung führen, da beide Werkzeuge immer in die gleiche Richtung bewegt werden.

Ein Bearbeitungswerkzeug für eine Vorrichtung zum Bearbeiten, insbesondere zum Stanzen und Verbinden, eines Werkstücks ist in EP 2 450 165 A1 beschrieben. Hierbei ist vorgesehen, dass die Verschiebebewegung eines Schlittens im Wesentlichen in Richtung der Zustellbewegung des Unterwerkzeugs zu dem ihm zugeordneten Oberwerkzeug oder orthogonal zu dieser Richtung verläuft.

Eine Vibrationsschweißanlage ist in DE 20 2005 007 282U1 beschrieben. Das Unterwerkzeug ist hierbei auf dem Hubtisch mittels einer Antriebseinrichtung in wenigstens einer Richtung horizontal verfahrbar gelagert. Weiterhin sind Steuermittel vorgesehen, die den Hubantrieb und/oder die Antriebseinrichtung bei einer Hub- oder Senkbewegung derart ansteuern, dass gemäß einer definierten Steuerkurve zusätzlich zu der Hub- oder Senkbewegung einer Horizontalverlagerung des Unterwerkzeugs erzielbar ist.

Ein Zusammenbau-Verfahren zum Zusammenbauen von mindestens einem ersten Teil und einem zweiten Teil, von denen jedes mindestens eine erste Befestigungslippe mit einer Befestigungsoberfläche aufweist, ist in WO 2013/004279 A1 beschrieben.

Aus DE 20 2011 003 610 U1 ist weiterhin eine Vorrichtung zum Herstellen eines Bauteils bekannt. Die Kunststoffteile des Bauteils werden mittels Spritzgießen in der Spritzgussform hergestellt. Weiterhin sind Schweißmittel vorgesehen, mittels derer die Kunststoffteile in der Spritzgussform durch Schweißen miteinander verbunden werden, wobei hierzu die Werkzeugteile aus einer Schweißposition heraus in einer zur Werkzeugrichtung geneigten Schweißrichtung gegeneinander gefahren werden, sodass zu verschweißende Randbereiche der Kunststoffteile in Kontakt gebracht werden.

Die Aufgabe der vorliegenden Erfindung ist daher, eine Kunststoffschweißvorrichtung bereitzustellen, mit der auch Bauteile mit komplexen Hinterschnitten einfach und schnell verschweißbar sind. Weiterhin soll ein entsprechendes Kunststoffschweißverfahren bereitgestellt werden.

Die obige Aufgabe wird gelöst durch eine Kunststoffschweißvorrichtung gemäß dem unabhängigen Patentanspruch 1 sowie ein Kunststoffschweißverfahren gemäß dem unabhängigen Patentanspruch 9. Weitere vorteilhafte Ausgestaltungen ergeben sich aus der nachfolgenden Beschreibung, den Zeichnungen sowie den abhängigen Patentansprüchen.

Die erfindungsgemäße Kunststoffschweißvorrichtung umfasst ein erstes Werkzeug, das an einem ersten Träger angeordnet ist, und ein zweites Werkzeug, das an einem zweiten Träger angeordnet ist, wobei das erste Werkzeug mittels eines ersten Antriebs relativ zum ersten Träger in eine erste Richtung geradlinig zwischen einer ersten Position und einer zweiten Position bewegbar ist, während ein Ursprung eines ersten gedachten Kugelkoordinatensystems in der ersten Position, vorzugsweise am ersten Werkzeug, angeordnet ist, wobei sich die z-Achse als eine erste z-Achse in Richtung des zweiten Trägers erstreckt, und für einen ersten Neigungswinkel zwischen der in Richtung des zweiten Trägers positiven ersten z-Achse und der ersten Richtung 0 ≤ υ₁ ≤ π/2 gilt, wodurch ein erstes Bauteil am ersten Werkzeug mit einem zweiten Bauteil am zweiten Werkzeug in Eingriff bringbar ist.

Die erfindungsgemäß bevorzugte Kunststoffschweißvorrichtung wird nachfolgend zum besseren Verständnis im Betrieb beschrieben. Für den beispielhaften Betrieb ist der erste Träger ein Hubtisch und der zweite Träger eine obere Befestigungsplatte. Somit stellt das erste Werkzeug ein Unterwerkzeug dar und das zweite Werkzeug ein Oberwerkzeug.

Weiterhin ist ein erstes Bauteil beispielhaft ein Gehäuse, in dem ein Einbauteil angeordnet ist, beispielsweise eingeclipst oder eingerastet ist. Dieses Einbauteil verfügt über einen oder mehrere Vorsprünge, die, wenn das erste Bauteil von oben betrachtet wird, über einen Rand des ersten Bauteils hervorstehen. Da der Rand aber zum Fügebereich gehört, muss ein zweites Bauteil damit in Eingriff bringbar sein. Dies ist mittels der erfindungsgemäß bevorzugten Kunststoffschweißvorrichtung realisierbar, wie nachfolgend verdeutlicht wird.

Wie herkömmlich auch, wird zunächst ein erstes Bauteil auf bzw. an - was hier gleichbedeutend benutzt wird - dem ersten Werkzeug angeordnet, beispielhaft also dem Unterwerkzeug. Vorzugsweise befindet sich das erste Werkzeug hierbei in der ersten Position. In dieser ersten Position ist das erste Werkzeug am ersten Träger angeordnet, d.h. insbesondere unmittelbar benachbart dem ersten Träger angeordnet. Der Einfachheit halber wird davon ausgegangen, dass sich das zweite Bauteil bereits im zweiten Werkzeug befindet.

Um nun das erste Bauteil mit dem zweiten Bauteil in Eingriff zu bringen, wird das erste Werkzeug von der ersten Position in die zweite Position verfahren. Dies erfolgt bevorzugt mittels nur eines ersten Antriebs geradlinig entlang der ersten Richtung. Wie bereits oben dargelegt ist das erste Werkzeug in der ersten Position benachbart dem ersten Träger angeordnet. In der zweiten Position weist das erste Werkzeug hingegen einen Abstand zum ersten Träger auf, der größer ist als der Abstand in der ersten Position. Die erste Richtung ist bestimmt durch den ersten Neigungswinkel zwischen der ersten z-Achse und der ersten Richtung. Der Ursprung des ersten gedachten Kugelkoordinatensystems ist am ersten Werkzeug in der ersten Position angeordnet, während sich die z-Achse als eine erste z-Achse in Richtung des zweiten Trägers mit dem daran angeordneten zweiten Werkzeug erstreckt. Für den ersten Neigungswinkel gilt dabei 0 ≤ υ₁ ≤ π/2. Es ist bevorzugt, dass die erste z-Achse eine Normale zur x,y-Ebene bildet. Weiterhin schließen im gedachten ersten Kugelkoordinatensystem vorzugsweise die x-Achse als eine erste x-Achse und die y-Achse als eine erste y-Achse einen rechten Winkel ein. Gemäß einer ersten Ausführungsform liegt dabei die erste Position innerhalb der x,y-Ebene. Insbesondere, und ausgehend von einer x,y-Ebene des ersten Kugelkoordinatensystems, die vorzugsweise parallel zu einer Oberfläche des ersten und/oder des zweiten Trägers verläuft, gilt für den ersten Neigungswinkel vorzugsweise 0 < υ₁ < π/2. Somit ist das erste Bauteil durch ein geradliniges Verfahren des ersten Werkzeugs relativ zum ersten Träger entlang der ersten Richtung mit dem zweiten Bauteil im zweiten Werkzeug in Eingriff bringbar. Ebenfalls ist eine Drehung des ersten Werkzeugs um einen bestimmten Drehwinkel, der sich zwischen der ersten x-Achse und einer Projektion der ersten Richtung auf die durch die erste x-Achse und die erste y-Achse gebildete Ebene ergibt, während des Verfahrens realisierbar. Alternativ wird der Drehwinkel konstant gehalten.

Nachdem das erste Werkzeug die zweite Position erreicht hat und somit das erste Bauteil mit dem zweiten Bauteil in Eingriff ist, erfolgt daher ein Verschweißen des ersten und des zweiten Bauteils miteinander. Zum Schluss verfährt das erste Werkzeug dann wieder in die erste Position, damit ein Bediener den Verbund aus verschweißtem erstem und zweitem Bauteil aus der Kunststoffschweißvorrichtung entnehmen kann.

Mittels der erfindungsgemäßen Kunststoffschweißvorrichtung wird das erste Werkzeug somit diagonal oder schräg im Raum bezogen auf den ersten Träger bewegt. Auf diese Weise ist ein in Eingriff bringen des ersten Bauteils mit dem zweiten Bauteil realisierbar, da entlang dieser Bewegungsrichtung kein Hinterschnitt vorliegt oder dadurch ein Hinterschnitt umfahren wird. Ein Vorteil dieser erfindungsgemäßen Kunststoffschweißvorrichtung ist somit auch, dass lediglich mittels eines Antriebs eine diagonale Bewegung des ersten Werkzeugs relativ zum ersten Träger realisierbar ist, was eine entsprechende Vereinfachung der Ansteuerung und somit Kostenreduktion im Vergleich zu herkömmlichen Kunststoffschweißvorrichtungen bereitstellt.

In einer bevorzugten Ausführungsform ist die Kunststoffschweißvorrichtung eine Reibschweißvorrichtung mit Vorwärmanordnung oder eine Infrarot-Schweißvorrichtung. Vorzugsweise sind hierbei der erste und der zweite Träger relativ zueinander entlang der ersten z-Achse bewegbar. Wieder ausgehend von den obigen Anfangsbedingungen, also dem ersten Bauteil im ersten Werkzeug und dem zweiten Bauteil bereits im zweiten Werkzeug, ergeben sich folgende zusätzlichen Schritte im Betrieb der erfindungsgemäßen Kunststoffschweißvorrichtung, deren Träger relativ zueinander bewegbar sind.

Zu Beginn befindet sich der erste Träger in Bezug zum zweiten Träger in einer Ausgangsposition. In dieser Ausgangsposition erfolgte beispielsweise das Beladen des ersten Werkzeugs mit dem ersten Bauteil durch den Bediener. Eine Sicherungsvorrichtung, die ein Hineingreifen des Bedieners in die Kunststoffschweißvorrichtung während des Betriebs verhindert, ist zu diesem Zeitpunkt noch nicht aktiviert, wird aber bei Start des Verfahrens aktiviert. Nach dem Starten verfahren der erste und der zweite Träger relativ zueinander von der Ausgangsposition entlang der ersten z-Achse aufeinander zu in eine erste Zwischenposition.

Sobald die erste Zwischenposition erreicht wurde, wird das erste Werkzeug von der ersten Position in die zweite Position verfahren, wie oben dargelegt. Der erste und der zweite Träger bleiben hierbei in der ersten Zwischenposition, verändern bevorzugt ihren Abstand zueinander also nicht. Dann erfolgt das Verschweißen des ersten mit dem zweiten Bauteil.

Nach dem Verschweißen erfolgt alternativ oder zusätzlich zum Verfahren bzw. Versetzen des ersten Werkzeugs von der zweiten Position in die erste Position ein Verfahren des ersten und des zweiten Trägers von der ersten Zwischenposition entlang der ersten Achse voneinander weg und zurück in die Ausgangsposition. Dann wird die Sicherheitsvorrichtung deaktiviert und der Bediener kann den Verbund aus erstem und zweitem Bauteil entnehmen.

Wenn die Kunststoffschweißvorrichtung zusätzlich die bevorzugte Vorwärmanordnung aufweist, dann sind die folgenden weiteren Schritte vorhanden. Nachfolgend wird beispielhaft wieder davon ausgegangen, dass das erste Bauteil im ersten Werkzeug und das zweite Bauteil bereits im zweiten Werkzeug angeordnet sind. Nach dem Starten des Betriebs der Kunststoffschweißvorrichtung wird die Vorwärmanordnung zwischen dem ersten und dem zweiten Werkzeug benachbart dem ersten und dem zweiten Bauteil angeordnet. Hierzu wird die Vorwärmanordnung beispielsweise von einer Ruheposition vorzugsweise über eine Ausrichtposition, in der sich die Vorwärmanordnung zwischen dem ersten und dem zweiten Werkzeug befindet, in eine Vorwärmposition verfahren. Die Vorwärmanordnung ist in einer ersten Ausführungsform hierzu eigenständig im Raum bewegbar, während sie in einer alternativen Ausführungsform beispielsweise an den ersten oder den zweiten Träger gekoppelt ist. Zur Unterstützung der benachbarten Anordnung der Vorwärmanordnung ist optional ein Verfahren des ersten und des zweiten Trägers aufeinander zu vorgesehen.

Nun erfolgt vorzugsweise ein Vorwärmen des ersten und des zweiten Bauteils in dem zu verschweißenden Bereich. Nach dem Vorwärmen wird die Vorwärmanordnung zwischen dem ersten und dem zweiten Werkzeug entfernt, insbesondere zurück in eine Ruheposition verfahren. Daran anschließend finden das Verfahren des ersten und des zweiten Trägers aufeinander zu sowie die oben aufgeführten Schritte zum Verschweißen statt.

Sollte ein Bediener das zweite Bauteil nicht direkt im zweiten Werkzeug anordnen, sondern das zweiten Bauteil auf dem ersten Bauteil im ersten Werkzeug anordnen, dann sind aufgrund der Bauteilgeometrie bevorzugt folgende weiteren Schritte erforderlich. Zunächst wird das erste Werkzeug von der ersten Position in die zweite Position verfahren. Optional erfolgt vorher ein Verfahren des ersten Trägers relativ zum zweiten Träger in die erste Zwischenposition, damit das erste und das zweite Werkzeug sich im richtigen Abstand zueinander befinden.

Nachdem das erste Werkzeug entlang der ersten Richtung zum zweiten Werkzeug verfahren worden ist, wird das zweite Bauteil an das zweite Werkzeug übergeben. Anschließend verfährt das erste Werkzeug von der zweiten Position wieder zurück in die erste Position. Nun können sich bevorzugt die oben beschriebenen Schritte mit der Vorwärmanordnung anschließen. Ein Vorteil dieser Vorgehensweise ist, dass das zweite Bauteil nicht manuell im zweiten Werkzeug angeordnet werden muss. Somit sind das üblicherweise schwierige ÜberKopf-Einlegen des zweiten Bauteils und die daraus resultierende nachteilige ergonomische Position des Bedieners vermieden. Weiterhin ist die Positioniergenauigkeit im zweiten Werkzeug erhöht.

In einer weiteren bevorzugten Ausführungsform ist der mindestens eine erste Antrieb an einem ersten Ende mit dem ersten Träger verbunden und mit einem zweiten Ende mit einer Hebestruktur des ersten Werkzeugs. Durch die Hebestruktur wird eine gleichmäßige Kraftübertragung vom ersten Antrieb auf das erste Werkzeug beim Verfahren relativ zum ersten Träger ermöglicht. Somit wird ein mögliches Verkanten oder Kippen des ersten Werkzeugs besonders effektiv vermieden.

In einer vorteilhaften Ausgestaltung ist zusätzlich das zweite Werkzeug mittels eines zweiten Antriebs, vorzugsweise nur ein zweiter Antrieb, relativ zum zweiten Träger in eine zweite Richtung geradlinig zwischen einer ersten Position und einer zweiten Position bewegbar. Ein Ursprung eines zweiten gedachten Kugelkoordinatensystems ist am zweiten Werkzeug in der ersten Position angeordnet. Die z-Achse des zweiten gedachten Kugelkoordinatensystems erstreckt sich als zweite z-Achse in Richtung des ersten Trägers. Für einen zweiten Neigungswinkel zwischen der in Richtung des ersten Trägers positiven zweiten z-Achse und der zweiten Richtung gilt 0 ≤ υ₂ ≤ π/2.

Auf diese Weise ist das zweite Werkzeug relativ zum zweiten Träger analog zum ersten Werkzeug bewegbar, d.h. die oben beschriebenen Bewegungsabläufe für das erste Werkzeug von der ersten Position in die zweite Position sind auch für das zweite Werkzeug durchführbar. Die Bewegung des zweiten Werkzeugs erfolgt dabei abgestimmt mit dem ersten Werkzeug, beispielsweise vor, nach oder gleichzeitig mit dem Verfahren des ersten Werkzeugs relativ zum ersten Träger.

Es ist bevorzugt, dass die zweite z-Achse eine Normale zur zweiten x,y-Ebene bildet. Weiterhin schließen im gedachten zweiten Kugelkoordinatensystem vorzugsweise die x-Achse als eine zweite x-Achse und die y-Achse als eine zweite y-Achse einen rechten Winkel ein. Gemäß einer ersten Ausführungsform liegt dabei die erste Position innerhalb der zweiten x,y-Ebene. Für den zweiten Neigungswinkel des zweiten Werkzeugs gilt, insbesondere ausgehend von einer x,y-Ebene des zweiten Kugelkoordinatensystems, die parallel zu einer Oberfläche des ersten und/oder des zweiten Trägers verläuft, vorzugsweise ein Bereich von 0 < υ₂ < π/2. In einer ersten Ausführungsform sind der erste und der zweite Neigungswinkel voneinander verschieden. Hierdurch können weitere verschiedene Bauteilgeometrien umfahren werden. Es ist ebenfalls bevorzugt, durch Abstimmung des ersten und des zweiten Antriebs aufeinander Bewegungszeit der Werkzeuge einzusparen. Dadurch wird bevorzugt insgesamt die Taktzeit zur Herstellung einer Verbindung reduziert. In einem bevorzugten Sonderfall, und wenn beide Werkzeuge gleichermaßen aufeinander zu bewegt werden sollen, sind der erste und der zweite Neigungswinkel gleich. Es gilt dann also υ₁ = υ₂.

Bei der oben beschriebenen Ausführungsform, in der das zweite Werkzeug relativ zum zweiten Träger bewegbar ist, handelt es sich vorzugsweise um eine Infrarot-Schweißvorrichtung. Bei dieser Art der Kunststoffschweißvorrichtung treten keine Reibschweißkräfte, also insbesondere keinen Vibrationen, am zweiten Werkzeug auf. Dies gestattet es, das zweite Werkzeug nicht starr am zweiten Träger anzuordnen.

In einer weiteren bevorzugten Ausführungsform weist die Kunststoffschweißvorrichtung ein drittes Werkzeug, das am ersten Träger angeordnet ist, sowie ein viertes Werkzeug auf, das am zweiten Träger angeordnet ist. Das dritte Werkzeug ist mittels eines dritten Antriebs relativ zum ersten Träger in eine dritte Richtung geradlinig zwischen einer ersten Position und einer zweiten Position bewegbar. Die dritte Richtung stellt vorzugsweise eine Spiegelung der ersten Richtung an einer ersten Spiegelebene zwischen dem ersten und dem dritten Werkzeug dar. Für einen ersten gespiegelten Neigungswinkel zwischen der ersten gespiegelten z-Achse und der dritten Richtung bezogen auf den ersten Neigungswinkel gilt daher υ_{1S} = υ₁. Dies gilt analog für den ersten gespiegelten Drehwinkel bezogen auf den ersten Drehwinkel. Eine Bewegung des dritten Werkzeugs erfolgt vor, nach oder gleichzeitig mit dem Verfahren des ersten Werkzeugs relativ zum ersten Träger.

Somit können zwei spiegelsymmetrische Bauteile, beispielsweise eine rechte und eine linke Leuchte für ein Kraftfahrzeug mittels dieser Ausführungsform der erfindungsgemäßen Kunststoffschweißvorrichtung gleichzeitig verschweißt werden, wobei lediglich jeweils ein Antrieb für die diagonale Verfahrbarkeit der Werkzeuge im Raum erforderlich ist. Im Gegensatz zu herkömmlichen Kunststoffschweißvorrichtungen sind somit zwei spiegelsymmetrische Bauteile mit der Ausführungsform der Kunststoffschweißvorrichtung gemäß der vorliegenden Erfindung gleichzeitig verarbeitbar. Dies ergibt zudem einen entsprechenden Kosten- und Raumvorteil im Vergleich zu herkömmlichen Kunststoffschweißvorrichtungen.

In einer nachfolgenden vorteilhaften Ausführungsform ist ebenfalls das vierte Werkzeug mittels eines vierten Antriebs relativ zum zweiten Träger in eine vierte Richtung geradlinig zwischen einer ersten Position und einer zweiten Position bewegbar. Die vierte Richtung stellt hierbei eine Spiegelung der zweiten Richtung an einer zweiten Spiegelebene zwischen dem zweiten und dem vierten Werkzeug dar. Für einen zweiten gespiegelten Neigungswinkel zwischen der gespiegelten zweiten z-Achse und der vierten Richtung bezogen auf den zweiten Neigungswinkel gilt daher υ_{2S} = υ₂. Analog gilt dies für den zweiten gespiegelten Drehwinkel bezogen auf den zweiten Drehwinkel.

Somit sind alle vier Werkzeuge in Bezug auf den jeweiligen Träger bewegbar, wobei das erste und das dritte Werkzeug sowie das zweite und das vierte Werkzeug sich jeweils spiegelsymmetrisch zueinander bewegen. Dies ermöglicht ein Maximum an Flexibilität beim Verfahren bzw. Bewegen der Werkzeuge relativ zum jeweiligen Träger, so dass die entsprechenden Bauteile besonders effektiv miteinander in Eingriff gebracht werden können. Insbesondere können noch komplexere Bauteilgeometrien berücksichtigt werden.

Das erfindungsgemäße Kunststoffschweißverfahren, mittels einer erfindungsgemäßen Kunststoffschweißvorrichtung, weist die folgenden Schritte auf: Anordnen eines ersten Bauteils auf einem ersten Werkzeug, das auf einem ersten Träger der Kunststoffschweißvorrichtung angeordnet ist und zwischen einer ersten Position und einer zweiten Position bewegbar ist, wobei ein Ursprung eines ersten gedachten Kugelkoordinatensystems am ersten Werkzeug in der ersten Position angeordnet ist, während sich die z-Achse als eine erste z-Achse in Richtung eines zweiten Trägers mit einem daran angeordneten zweiten Werkzeug erstreckt, danach Verfahren bzw. Bewegen des ersten Werkzeugs mittels eines ersten Antriebs relativ zum ersten Träger geradlinig entlang einer ersten Richtung von der ersten Position in die zweite Position, wobei das erste Werkzeug in der ersten Position benachbart dem ersten Träger angeordnet ist und in der zweiten Position einen Abstand zum ersten Träger aufweist, der größer ist als der Abstand in der ersten Position, während für einen ersten eingeschlossenen Neigungswinkel zwischen der ersten z-Achse und der ersten Richtung 0 ≤ υ₁ ≤ π/2 gilt, wodurch das erste Bauteil im ersten Werkzeug mit einem zweiten Bauteil im zweiten Bauteil im zweiten Werkzeug in Eingriff gebracht wird. Danach bzw. anschließend erfolgt ein Verschweißen des ersten und des zweiten Bauteils miteinander, beispielsweise mittels Reibschweißen nach vorherigem Vorwärmen der Bauteile oder ausschließlich mittels Zusammendrücken der Bauteile nach dem Vorwärmen. Im Hinblick auf die sich ergebenen Vorteile wird auf die obigen Ausführungen zur erfindungsgemäßen Kunststoffschweißvorrichtung verwiesen.

In einer bevorzugten Ausführungsform umfasst das Kunststoffschweißverfahren die weiteren Schritte: Verfahren des ersten und des zweiten Trägers von einer Ausgangsposition entlang der ersten Achse aufeinander zu in eine erste Zwischenposition vor dem Verfahren des ersten Werkzeugs von der ersten Position in die zweite Position. Weiterhin umfasst das Verfahren den Schritt des Verfahrens des ersten und des zweiten Trägers von der ersten Zwischenposition entlang der ersten Achse voneinander weg in die Ausgangsposition nach dem Verschweißen des ersten und des zweiten Bauteils miteinander. Auch hierzu wird auf die oben bereits bei der Beschreibung der erfindungsgemäßen Kunststoffschweißvorrichtung beschriebenen Vorteile verwiesen.

In einer ebenso bevorzugten Ausführungsform umfasst das Kunststoffschweißverfahren die weiteren Schritte: Anordnen eines zweiten Bauteils auf dem ersten Bauteil im ersten Werkzeug, Verfahren des ersten Werkzeugs von der ersten Position in die zweite Position, danach Übergeben des zweiten Bauteils an das zweite Werkzeug und anschließend Verfahren des ersten Werkzeugs von der zweiten Position in die erste Position. Auf diese Weise wird das zweite Bauteil im zweiten Werkzeug, beispielsweise dem Oberwerkzeug angeordnet. Eine manuelle Anordnung des zweiten Bauteils im Oberwerkzeug ist somit nicht erforderlich. Dies gewährleistet eine genaue Positionierung des zweiten Bauteils im zweiten Werkzeug und eine entsprechend genaue Ausrichtung der beiden Bauteile zueinander für das spätere Schweißverfahren.

Ebenso bevorzugt ist, wenn das Kunststoffschweißverfahren die weiteren Schritte aufweist: Anordnen einer Vorwärmanordnung zwischen dem ersten und dem zweiten Werkzeug benachbart dem ersten und dem zweiten Bauteil, Vorwärmen des ersten und des zweiten Bauteils in den zu verschweißenden Bereichen und Entfernen der Vorwärmanordnung zwischen dem ersten und dem zweiten Werkzeug. Auf diese Weise ist eine Reibschweißvorrichtung mit Vorwärmanordnung oder eine reine Infrarot-Schweißvorrichtung betreibbar.

Wenn das zweite Werkzeug am zweiten Träger ebenfalls bewegbar angeordnet ist, dann ist ein Ursprung eines zweiten gedachten Kugelkoordinatensystems am zweiten Werkzeug in einer ersten Position angeordnet. Eine zweite z-Achse erstreckt sich somit in Richtung des ersten Trägers und das Kunststoffschweißverfahren weist den weiteren Schritt auf: Verfahren des zweiten Werkzeugs mittels eines zweiten Antriebs relativ zum zweiten Träger geradlinig in eine zweite Richtung zwischen einer ersten Position und einer zweiten Position, wobei für einen zweiten Neigungswinkel zwischen der in Richtung des ersten Trägers positiven zweiten z-Achse und der zweiten Richtung 0 ≤ υ₂ ≤ π/2 gilt.

Die Bewegungsrichtung von einem oder beiden, dem dritten und dem vierten Werkzeug, wenn vorhanden, ist jeweils spiegelsymmetrisch zum ersten bzw. zweiten Werkzeug. Somit gilt für eine dritte Bewegungsrichtung, dass diese spiegelsymmetrisch zur ersten Richtung ist und für die vierte Richtung gilt, dass sie spiegelsymmetrisch zur zweiten Richtung ist. Dementsprechend sind sowohl die Neigungswinkel an den gespiegelten Achsen der gespiegelten Kugelkoordinatensysteme gleich mit den ursprünglichen Neigungswinkeln wie auch die gespiegelten Drehwinkel gleich sind mit den ursprünglichen Drehwinkeln. Das Kunststoffschweißverfahren weist daher vorteilhafterweise den Schritt auf: Verfahren des dritten Werkzeugs mittels eines dritten Antriebs relativ zum ersten Träger entlang einer dritten Richtung von einer ersten Position in eine zweite Position, wobei die dritte Richtung einer Spiegelung der ersten Richtung an einer ersten Spiegelebene zwischen dem ersten und dem dritten Werkzeug entspricht. Weiterhin bevorzugt weist das Kunststoffschweißverfahren den Schritt auf: Verfahren des vierten Werkzeugs mittels eines vierten Antriebs relativ zum zweiten Träger entlang einer vierten Richtung von einer ersten Position in eine zweite Position, wobei die vierte Richtung einer Spiegelung der zweiten Richtung an einer zweiten Spiegelebene zwischen dem zweiten und dem vierten Werkzeug entspricht.

Nachfolgend wird die vorliegende Erfindung unter Bezugnahme auf die begleitenden Zeichnungen detailliert erläutert. In den Figuren sind gleiche Bauteile mit gleichen Bezugszeichen gekennzeichnet. Es zeigen:
- Fig. 1: eine perspektivische Ansicht einer bevorzugten Ausführungsform der erfindungsgemäßen Kunststoffschweißvorrichtung,
- Fig. 2: ein beispielhaftes Bauteil,
- Fig. 3: eine Detailansicht eines Bereichs des Bauteils aus Fig. 2,
- Fig. 4: eine schematische Schnittansicht des Bauteils aus Fig. 2 in Kombination mit einer bevorzugten Vorwärmvorrichtung,
- Fig. 5: eine schematische Darstellung einer ersten bevorzugten Ausführungsform einer erfindungsgemäßen Kunststoffschweißvorrichtung,
- Fig. 6: eine schematische Darstellung einer zweiten bevorzugten Ausführungsform der erfindungsgemäßen Kunststoffschweißvorrichtung,
- Fig. 7: eine Frontansicht einer dritten bevorzugten Ausführungsform der erfindungsgemäßen Kunststoffschweißvorrichtung,
- Fig. 8: eine perspektivische Ansicht der Ausführungsform aus Fig. 7,
- Fig. 9: eine schematische Darstellung der Ausführungsform aus Fig. 7 in einer ersten Position,
- Fig. 10: eine schematische Darstellung der Ausführungsform aus Fig. 7 in einer zweiten Position,
- Fig. 11: eine schematische Darstellung einer vierten bevorzugten Ausführungsform der erfindungsgemäßen Kunststoffschweißvorrichtung sowie
- Fig. 12: einen schematischen Verfahrensablauf einer bevorzugten Ausführungsform eines erfindungsgemäßen Kunststoffschweißverfahrens.

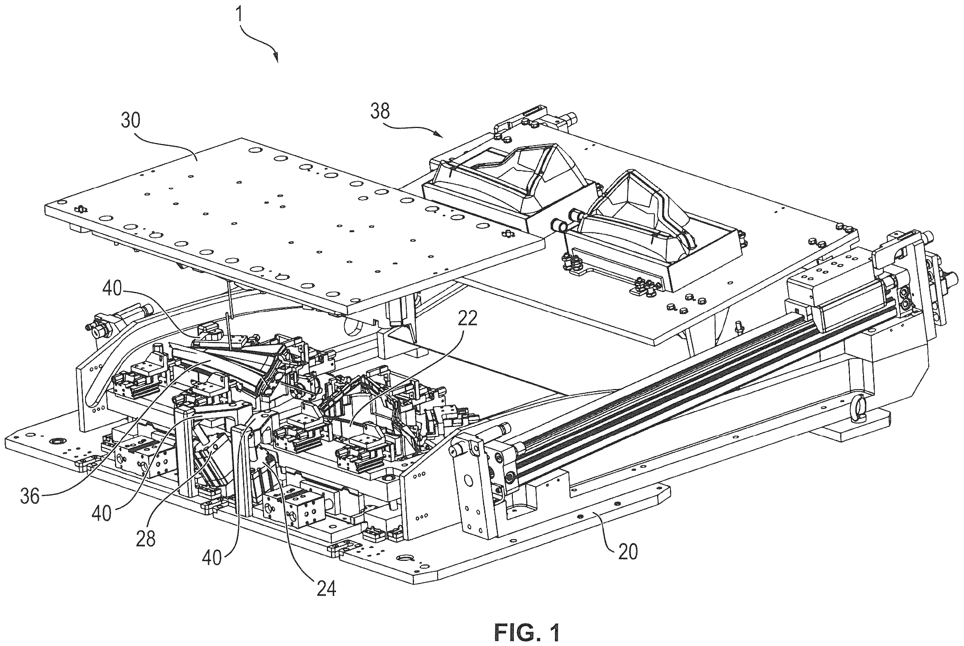

Eine Ausführungsform der erfindungsgemäßen Kunststoffschweißvorrichtung 1 ist in Fig. 1 dargestellt. Die Kunststoffschweißvorrichtung 1 ist zum Verschweißen von Bauteilen oder Bauteilgruppen verwendbar, die aus Kunststoff bestehen oder Kunststoff enthalten. Hierbei kann die Kunststoffschweißvorrichtung 1 sowohl in der Automobilindustrie, beispielsweise zur Herstellung von Leuchten, als auch in der Medizintechnik oder bei der Herstellung von Konsumgütern Verwendung finden. Die Kunststoffschweißvorrichtung 1 umfasst einen ersten Träger 20 und einen zweiten Träger 30. Am ersten Träger 20 sind ein erstes 22 sowie ein drittes Werkzeug 26 angeordnet. Am zweiten Träger 30 sind ein zweites 32 sowie ein viertes Werkzeug 34 angeordnet. Zudem verfügt die Kunststoffschweißvorrichtung 1 über eine Vorwärmanordnung 38 mit insgesamt vier Vorwärmvorrichtungen. Die Vorwärmanordnung 38 ist an den ersten Träger 20 gekoppelt und mittels einer Kulissenführung zwischen einer Ruheposition und einer Ausrichtposition verfahrbar. In der Ausrichtposition befindet sich die Vorwärmanordnung zwischen dem ersten 20 und dem zweiten Träger 30.

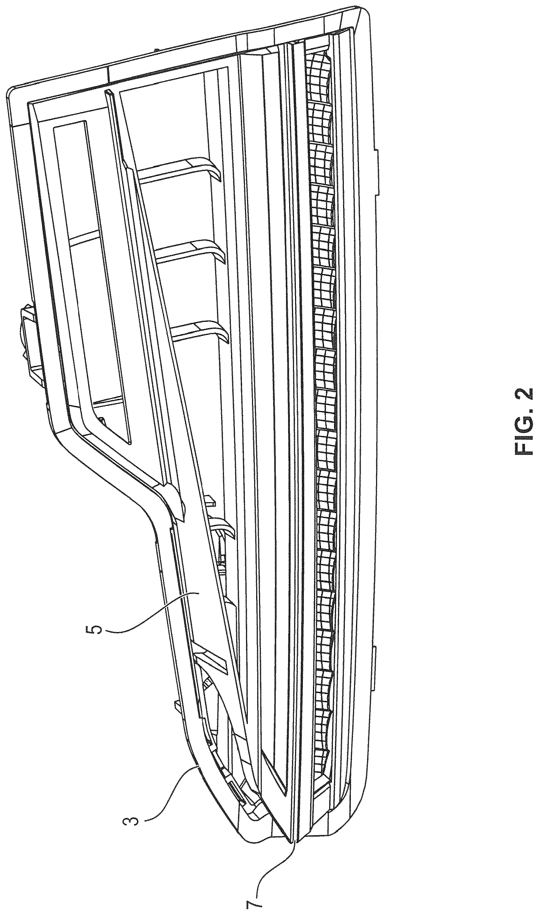

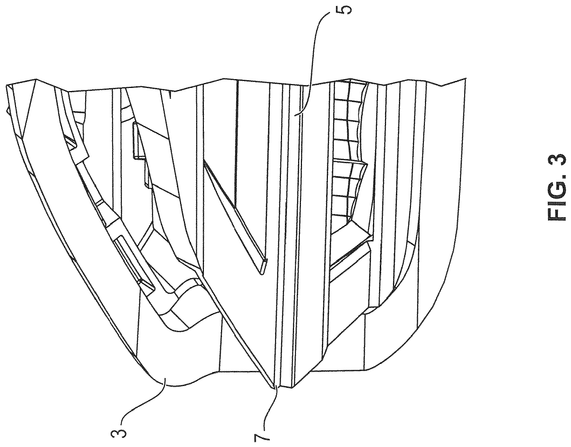

Ein beispielhaftes Bauteil 3 ist in den Fig. 2 und 3 dargestellt. Fig. 3 stellt hierbei einen Ausschnitt des linken Bereichs aus Fig. 2 dar. Im Bauteil 3 ist ein Einbauteil 5 angeordnet. Das Einbauteil 5 ist in das Bauteil 3 vorzugsweise eingerastet, eingeclipst oder eingeschweißt und weist einen Überstand bzw. Vorsprung 7 über einen Fügebereich des Bauteils 3 auf. Alternativ weist das Bauteil 3 auch selbst ein Element auf, das in der für ein Reibschweißen erforderlichen Winkellage einen Vorsprung darstellt.

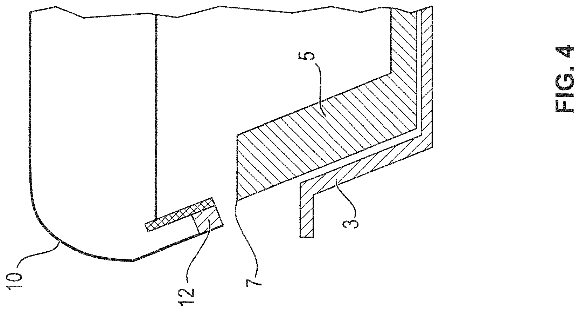

In der späteren Verwendung des Bauteils 3 wird am Bauteil 3, das insbesondere ein Gehäuse ist, ein weiteres Bauteil befestigt, beispielsweise und Bezug nehmend auf die Herstellung von Leuchten in der Automobilindustrie ein Deckglas. Wie anhand der Figuren 1 und 2 leicht erkennbar ist, ist ein vertikales Aufsetzen, also ein Aufsetzen von oben, des weiteren Bauteils auf das Bauteil 3 aufgrund des Vorsprungs 7 des Einbauteils 5 nicht möglich. Somit ist eine herkömmliche Kunststoffschweißvorrichtung auch nicht in der Lage, das Bauteil 3 mit dem weiteren Bauteil zu verschweißen, insbesondere nicht unter Verwendung eines vorherigen Vorwärmvorgangs mittels einer Vorwärmanordnung. Dies wird nachfolgend unter Bezugnahme auf Fig. 4 erläutert.

In Fig. 4 ist das Bauteil 3 mit dem Einbauteil 5 in Kombination mit einer Vorwärmvorrichtung 10 mit Infrarot-Strahler 12 dargestellt. Hierbei wird nochmal verdeutlicht, dass eine alleinige Bewegung des Bauteils 3 nach oben in Richtung der Vorwärmvorrichtung 10 zur Kollision des Infrarot-Strahlers 12 mit dem Einbauteil 5 führen würde. Diese Kollision wiederum würde zur Beschädigung und/oder Zerstörung des Einbauteils 5 und/oder des Infrarot-Strahlers 12 führen. Daher ist ein derart gestaltetes Bauteil nicht mit einer alleinigen Bewegung entlang der vertikalen Achse mit dem zweiten Bauteil verschweißbar.

Der Vorsprung 7 zeichnet sich somit dadurch aus, dass er aufgrund der beim Reibschweißen erforderlichen Winkellage der beiden Bauteile auftritt. Bei herkömmlichen Kunststoffschweißvorrichtungen können das erste und das zweite Werkzeug nur entlang einer vertikalen Achse bezogen auf den Boden auf dem die Kunststoffschweißvorrichtung steht, verfahren werden. Somit stellt der Vorsprung 7 eine Stelle dar, die bei einer Bewegung des ersten und des zweiten Werkzeugs relativ zueinander entlang der vertikalen Achse zu einer Beschädigung von einem der Bauteile und/oder einem der Werkzeuge führen kann.

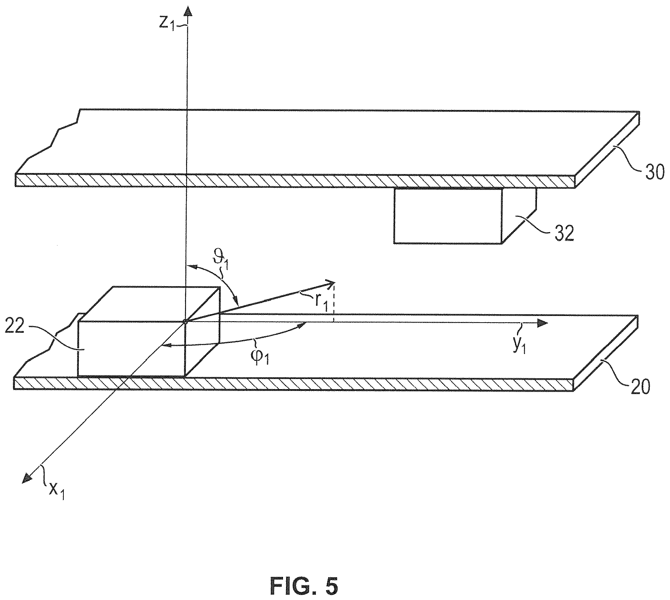

Fig. 5 zeigt nun eine schematische Ansicht einer ersten Ausführungsform der erfindungsgemäßen Kunststoffschweißvorrichtung 1. Die erfindungsgemäße Kunststoffschweißvorrichtung 1 umfasst einen ersten Träger 20 sowie einen zweiten Träger 30. Auf dem ersten Träger 20 ist ein erstes Werkzeug 22 angeordnet und auf dem zweiten Träger 30 ist ein zweites Werkzeug 32 angeordnet. Das erste Werkzeug 22 ist mittels eines ersten Antriebs relativ zum ersten Träger 20 geradlinig in eine erste Richtung r₁ bewegbar. Dies bedeutet, dass das erste Werkzeug 22 eine erste Position einnehmen kann, in der es am ersten Träger 20 angeordnet ist, sowie eine zweite Position, in der es vom ersten Träger 20 wegbewegt ist, also einen größeren Abstand zum ersten Träger 20 aufweist als in der ersten Position.

Wie in Fig. 5 erkennbar, sind das erste Werkzeug 22 und das zweite Werkzeug 32 auf dem jeweiligen Träger 20, 30 nicht vertikal übereinander, sondern seitlich versetzt zueinander angeordnet. Ein Ursprung eines ersten gedachten Kugelkoordinatensystems ist beispielhaft in der ersten Position des ersten Werkzeugs 22 angeordnet. Im Ursprung sind die Werte aller Achsen null, so dass der Ursprung auch als Nullpunkt bezeichnet werden kann. Die z-Achse als eine erste z-Achse z₁ erstreckt sich in Richtung des zweiten Trägers 30. Im dargestellten Beispiel sind die beiden Träger übereinander angeordnet und die x,y-Ebene verläuft aus Übersichtlichkeitsgründen parallel zu einer Oberfläche des ersten Trägers 20 und des zweiten Trägers 30. Es ist ersichtlich, dass die erste z-Achse z₁ eine Normale zur x,y-Ebene bildet. Zwischen der x-Achse als erste x-Achse x₁ und der y-Achse als erste y-Achse y₁ ist ein rechter Winkel eingeschlossen. Weiterhin erstreckt sich die erste y-Achse y₁ ebenfalls aus Übersichtlichkeitsgründen in Richtung des zweiten Werkzeugs 32. Da es sich um ein rechtshändiges Kugelkoordinatensystem handelt, ergibt sich die Ausrichtung der ersten x-Achse x₁ von alleine. Die Rechtshändigkeit des Kugelkoordinatensystems ist dadurch definiert, dass eine Drehung einer der Achsen um den gemeinsamen Koordinatenursprung auf die nächste Achse in der alphabetischen Reihenfolge bis zur Überdeckung auf dem kürzesten Wege im Gegenuhrzeigersinn ausgeführt wird.

In Fig. 5 wurde der Ursprung des Koordinatensystems auf die rechte Kante des ersten Werkzeugs 22 gelegt. Zum Verbinden des ersten Bauteils am ersten Werkzeug 22 mit dem zweiten Bauteil am zweiten Werkzeug 32 müssen die beiden Werkzeuge 22, 32 aufeinander zu bewegt werden. Beispielhaft und zur Verdeutlichung der Funktionsweise wird davon ausgegangen, dass die Oberflächen der Werkzeuge 22, 32 übereinander angeordnet werden müssen. Ausgehend vom Ursprung des ersten Kugelkoordinatensystems an der rechten Kante des ersten Werkzeugs 22 muss daher die rechte Kante des ersten Werkzeugs 22 mit der rechten Kante des zweiten Werkzeugs 32 ausgerichtet werden. Die resultierende erste Richtung r₁ ist durch einen Pfeil schematisch gekennzeichnet.

Die erste Richtung r₁ ist definiert durch einen ersten Neigungswinkel υ₁ zwischen der in Richtung des zweiten Trägers positiven ersten z-Achse z₁ und der ersten Richtung r₁. In dem vorliegenden Beispiel, in dem die x,y-Ebene parallel zu einer Oberfläche des ersten 20 und/oder des zweiten Trägers 30 verläuft, gilt insbesondere 0 < υ₁ < π/2. Der Wert des ersten Neigungswinkel mit υ₁ = 0 würde zu einer Bewegung entlang der ersten z-Achse führen. Aufgrund des oben erläuterten Vorsprungs 7 und der daraus resultierenden Problematik ist aber genau diese Bewegung nicht gewünscht. Der Wert des ersten Neigungswinkels mit υ₁ = π/2 würde eine Bewegung innerhalb der x,y-Ebene bedeuten. Dies ist jedoch ebenfalls nicht gewünscht, da der Abstand des ersten 20 und des zweiten Trägers 30 während einer Bewegung des ersten Werkzeugs 22 vorzugsweise konstant gehalten wird. Somit käme es in diesem Fall auch nicht zum Eingriff des ersten Bauteils mit dem zweiten Bauteil. Hierbei ist besonders hervorzuheben, dass insbesondere kein Antrieb für eine Bewegung innerhalb der x,y-Ebene vorgesehen ist. Vielmehr ist der erste Antrieb so ausgerichtet, dass eine Bewegung des ersten Werkzeugs 22 entlang der ersten Richtung r₁ alleine aufgrund des ersten Antriebs erfolgt.

Neben dem ersten Neigungswinkel υ₁ ist die erste Richtung r₁ weiterhin durch einen ersten Drehwinkel ϕ₁ definiert. Der erste Drehwinkel ϕ₁ ergibt sich aus dem Winkel zwischen der ersten x-Achse x₁ und der Projektion der ersten Richtung r₁ auf eine durch die erste x-Achse x₁ und die erste y-Achse y₁ gebildeten Ebene. Im vorliegenden Fall, in dem sich die erste y-Achse y₁ in Richtung des zweiten Werkzeugs 32 erstreckt, ergibt sich ein erster Drehwinkel ϕ₁ von ϕ₁ = π/2.

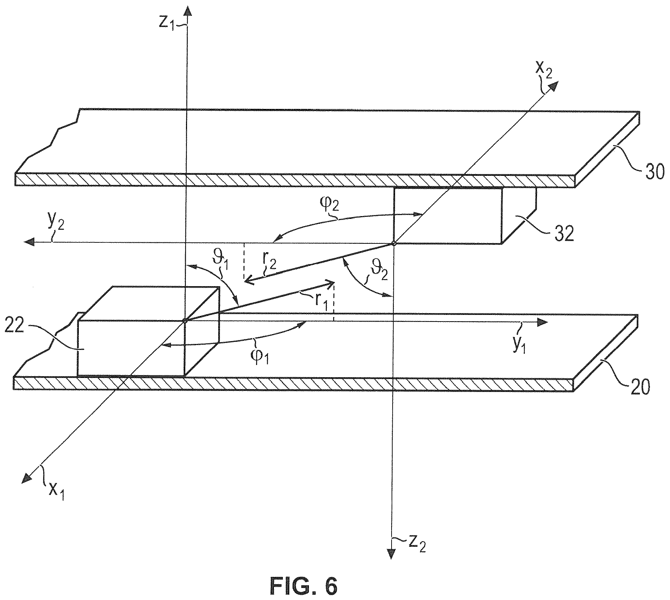

Fig. 6 stellt eine zweite Ausführungsform der erfindungsgemäßen Kunststoffschweißvorrichtung 1 dar. In dieser Ausführungsform ist neben dem ersten Werkzeug 22 auch das zweite Werkzeug 32 relativ zum zweiten Träger 30 bewegbar. Der Ursprung eines gedachten zweiten Kugelkoordinatensystems ist hierbei am zweiten Werkzeug 32 angeordnet. Im dargestellten Beispiel befindet sich der Ursprung an der linken Kante des zweiten Werkzeugs 32. In der Ausführungsform gemäß Fig. 6 sind beispielhaft beide Werkzeuge entlang der gleichen Strecke aufeinander zu bewegbar. Dadurch verlaufen die erste Richtung r₁ und die zweite Richtung r₂ parallel, aber in entgegengesetzte Richtungen. In diesem Sonderfall sind der erste υ₁ und der zweite Neigungswinkel υ₂ gleich. Dies gilt auf für den ersten ϕ₁ und den zweiten Drehwinkel ϕ₂. Auch andere Bewegungsformen sind möglich, insbesondere können der erste υ₁ und der zweite Neigungswinkel υ₂ der beiden Bewegungsrichtungen voneinander verschieden sein. Der Wert des ersten υ₁ und des zweiten Neigungswinkels υ₂ hängt dabei insbesondere von der Form der miteinander in Eingriff zu bringenden Bauteile ab.

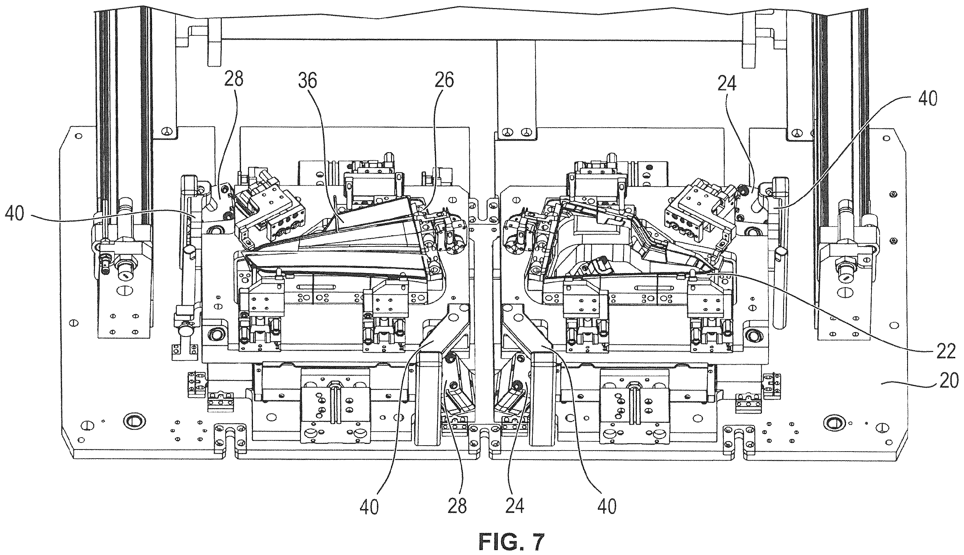

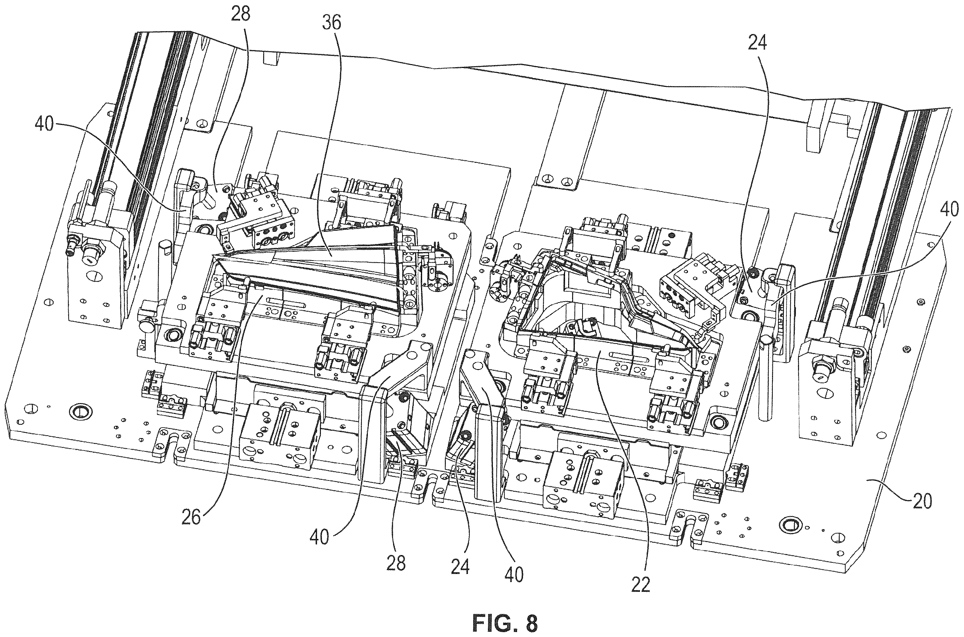

Fig. 7 zeigt nun eine dritte Ausführungsform der erfindungsgemäßen Kunststoffschweißvorrichtung 1. Hierbei verfügt der erste Träger 20 weiterhin über ein drittes Werkzeug 26. Weiterhin ist der erste Antrieb 24 für das erste Werkzeug 22 sowie der dritte Antrieb 28 für das dritte Werkzeug 26 dargestellt. Die Antriebe 24, 28 sind mit einem Ende mit dem ersten Träger 20 verbunden und mit dem anderen Ende mit einer Hebestruktur 40. Mittels der Hebestruktur 40 wird das erste Werkzeug 22 bzw. das dritte Werkzeug 26 durch den jeweiligen Antrieb 24, 28 relativ zum ersten Träger 20 in die erste Richtung r₁ bzw. eine dritte Richtung r₃ verfahren. Die entsprechende Anordnung ist in Fig. 8 perspektivisch dargestellt.

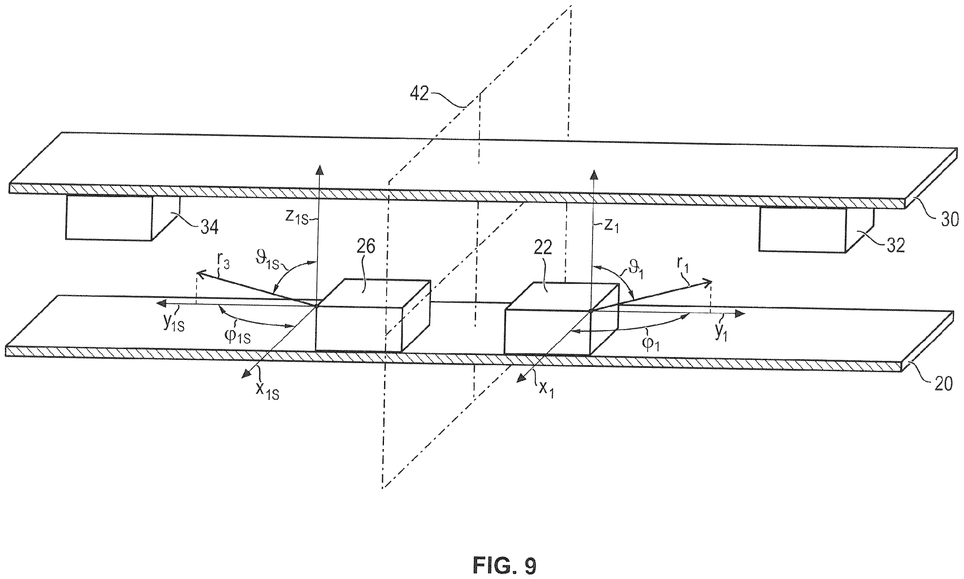

Nun bezugnehmend auf Fig. 9 wird die Funktionsweise schematisch dargestellt. Bei den Werkzeugen 22, 26 handelt es sich um spiegelsymmetrische Werkzeuge. Auf diese Weise sind zwei spiegelsymmetrische Bauteile zur gleichen Zeit verarbeitbar. Daher können beispielsweise eine rechte und eine linke Leuchte in der Kunststoffschweißvorrichtung zur gleichen Zeit verarbeitet bzw. hergestellt werden.

Zwischen dem ersten Werkzeug 22 und dem dritten Werkzeug 26 verläuft parallel zur ersten z-Achse zi, vorzugsweise mittig bezogen auf die erste Position der beiden Werkzeuge 22, 26, eine erste Spiegelebene 42. Die dritte Richtung r₃ ist somit eine Spiegelung der ersten Richtung r₁ an dieser ersten Spiegelebene. Dasselbe gilt für das entsprechende erste gespiegelte Kugelkoordinatensystem.

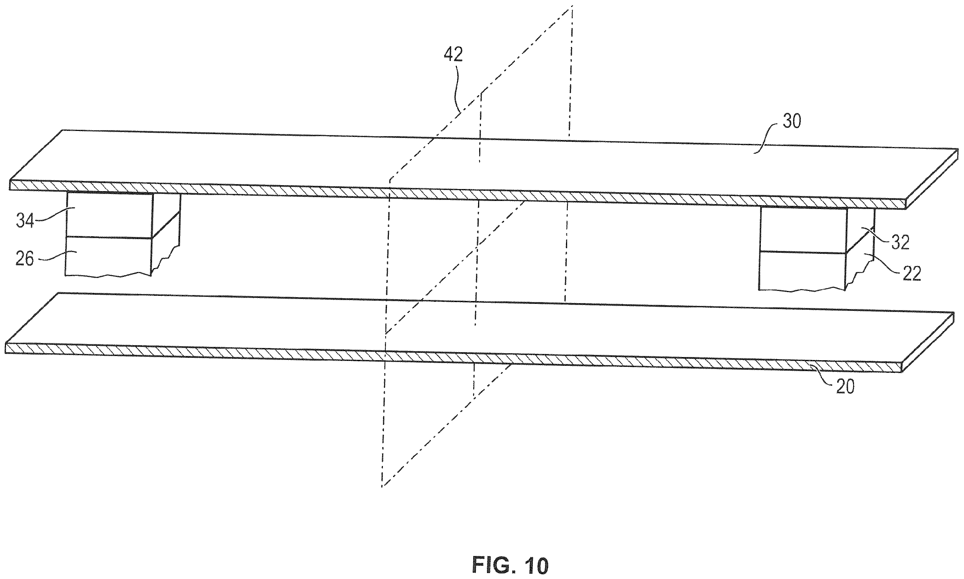

Wie aus Fig. 9 ersichtlich ist das erste Kugelkoordinatensystem auf der rechten Seite ein rechtshändiges Kugelkoordinatensystem. Dementsprechend ist das gedachte Kugelkoordinatensystem auf der linken Seite, also die Spiegelung, ein linkshändiges Kugelkoordinatensystem. Für den ersten gespiegelten Neigungswinkel υ_{1S} gilt bezogen auf den ersten Neigungswinkel υ₁, dass υ_{1S} = υ₁ ist. Die analoge Voraussetzung gilt für den ersten gespiegelten Drehwinkel ϕ_{1S} bezogen auf den ersten Drehwinkel ϕ₁, so dass gilt: ϕ₁ = ϕ_{1S} Fig. 10 stellt das erste 22 und das dritte Werkzeug 26 nach dem Verfahren von der ersten Position in die zweite Position dar. Hierbei ist das erste Werkzeug 22 benachbart dem zweiten Werkzeug 32 angeordnet, so dass das erste Bauteil mit dem zweiten Bauteil in Eingriff ist. Weiterhin ist das dritte Werkzeug 26 benachbart dem vierten Werkzeug 34 angeordnet, so dass ein drittes Bauteil mit einem vierten Bauteil in Eingriff ist.

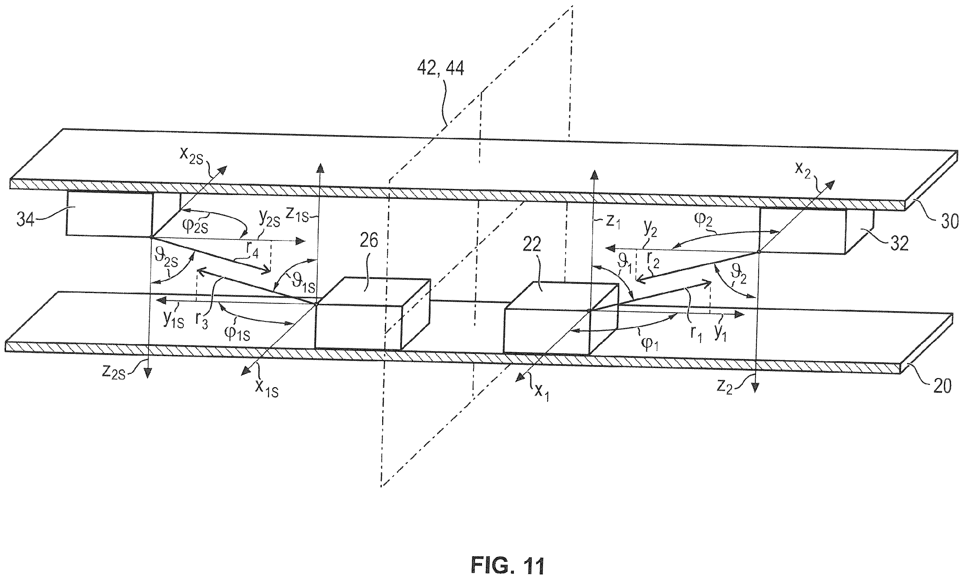

In Fig. 11 ist nun eine vierte Ausführungsform dargestellt, in der alle vier Werkzeuge 22, 26, 32 und 34 bezogen auf ihren jeweiligen Träger 20, 30 bewegbar sind. Hierbei wird die Bewegung des zweiten Werkzeugs 32 an einer zweiten Spiegelebene 44 gespiegelt und resultiert in der Bewegung des vierten Werkzeugs 34. Dementsprechend ist die vierte Richtung r₄ eine Spiegelung der zweiten Richtung r₂. Bei dem zweiten gedachten Kugelkoordinatensystem im zweiten Werkzeug 32 handelt es sich um ein rechtshändiges Kugelkoordinatensystem, wenn es vom zweiten Träger 30 aus betrachtet wird. Dementsprechend handelt es sich beim gedachten vierten Kugelkoordinatensystem als Spiegelung des zweiten gedachten Kugelkoordinatensystems um ein linkshändiges Kugelkoordinatensystem.

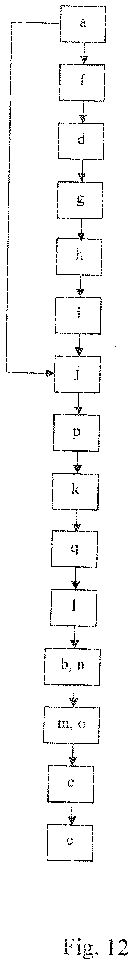

Ein schematischer Verfahrensablauf des erfindungsgemäßen Kunststoffschweißverfahrens ist in Fig. 12 dargestellt. Die Kunststoffschweißvorrichtung befindet sich insgesamt in einer Ausgangsposition. Dies bedeutet, dass der erste und der zweite Träger eine Ausgangsposition aufweisen, in der der Abstand zwischen dem erstem und dem zweiten Träger zum Beladen der Kunststoffschweißvorrichtung ausreicht. Weiterhin befinden sich die Werkzeuge, soweit sie beweglich am Träger angeordnet sind, in einer ersten Position.

Nun ordnet ein Bediener ein erstes Bauteil auf dem ersten Werkzeug 22 in Schritt a an. Weiterhin wird in Schritt f ein zweites Bauteil auf dem ersten Bauteil im ersten Werkzeug 22 angeordnet werden. Mit den beiden Bauteilen wird der erste Träger 20 in Richtung des zweiten Trägers 30 bis in eine erste Zwischenposition verfahren (Schritt d). Von dieser Zwischenposition aus erfolgt ein Verfahren mindestens des ersten Werkzeugs 22 von der ersten Position in die zweite Position (Schritt g). Bei Vorhandensein des dritten Werkzeugs 26 verfährt dieses analog zum ersten Werkzeug 22. Analog bedeutet hierbei, dass es denselben Schritt ausführt, dies aber nicht zeitgleich mit dem ersten Werkzeug 22 erfolgen muss, sondern auch davor oder danach erfolgen kann. Dasselbe gilt für den Fall, dass das zweite 32 und/oder das vierte Werkzeug 34 zwischen einer ersten und einer zweiten Position bewegbar sind.

Nachdem alle bewegbaren Werkzeuge 22, 26, 32, 34 in der zweiten Position angekommen sind erfolgt in Schritt h ein Übergeben des zweiten und/oder vierten Bauteils an das zweite Werkzeug 32 bzw. vierte Werkzeug 34. Danach werden die verfahrbaren Werkzeuge 22, 26, 32, 34 von der zweiten Position geradlinig zurück in die erste Position entlang der jeweiligen Richtung r₁, r₂, r₃, r₄ verfahren (Schritt i). Der erste 20 und der zweite Träger 30 verfahren nun in eine Aufnahmeposition für die Vorwärmanordnung 38. Alternativ zu diesen Schritten kann der Bediener das zweite und/oder vierte Bauteil auch direkt im zweiten 32 bzw. vierten Werkzeug 34 anordnen.

In Schritt j wird die Vorwärmanordnung 38 der Kunststoffschweißvorrichtung 1 zwischen dem ersten 22 und dem zweiten Werkzeug 32 benachbart dem ersten und dem zweiten Bauteil angeordnet. Dies gilt, soweit vorhanden, auch für das dritte 26 und das vierte Werkzeug 34. Der erste 20 und der zweite Träger 30 befinden sich hierbei in der Aufnahmeposition. Beispielsweise verfährt die Vorwärmanordnung 38 hierzu von einer Ruheposition zunächst in eine Ausrichtposition zwischen dem ersten 20 und dem zweiten Träger 30 in der Aufnahmeposition. Von der Ausrichtposition wird die Vorwärmanordnung 38 dann in eine Vorwärmposition benachbart den jeweiligen Bauteilen verfahren. Hierzu kann die Vorwärmanordnung 38 eigenständig im Raum bewegbar sein, oder sie ist beispielsweise an den ersten Träger 20 über eine Kulissenführung gekoppelt. Je nach Abstand zwischen den Bauteilen in den Werkzeugen 22, 26, 32, 34 und der jeweiligen Vorwärmvorrichtung 38 wird der Abstand zwischen dem ersten 20 und dem zweiten Träger 30 verringert, bevor die bewegbaren Werkzeuge 22, 26, 32, 34 von der ersten Position in die zweite Position zum Vorwärmen der Bauteile verfahren werden (Schritt p).

Es erfolgt dann in Schritt k ein Vorwärmen der Bauteile in den zu verschweißenden Bereichen. Nach ausreichender Vorwärmung wird in Schritt 1 die Vorwärmanordnung 38 zwischen dem ersten 22 und dem zweiten Werkzeug 32 sowie, wenn vorhanden, dem dritten 26 und dem vierten Werkzeug 34 entfernt. Das Entfernen erfolgt in der umgekehrten Reihenfolge, also werden die bewegbaren Werkzeuge 22, 26, 32, 34 zunächst von der zweiten Position zurück in die erste Position verfahren (Schritt q) und, wenn erforderlich wird der Abstand zwischen dem ersten Träger 20 und dem zweiten Träger 30 wieder etwas vergrößert. Dann wird die Vorwärmanordnung 38 in die Ausrichtposition und nachfolgend in die Ruheposition verfahren.

Nach dem Vorwärmen werden der erste Träger 20 und der zweite Träger 30 in die erste Zwischenposition verfahren (Schritt d). Das erste Werkzeug 22 befindet sich in der ersten Position und wird zum Verschweißen des ersten Bauteils mit dem zweiten Bauteil in die zweite Position entlang der ersten Richtung r₁ verfahren (Schritt b). Dasselbe gilt für das dritte Werkzeug 26 in Verbindung mit dem vierten Werkzeug 34 (Schritt n), soweit vorhanden. Zusätzlich kann, wenn das zweite 32 und das vierte Werkzeug 34 ebenfalls beweglich sind, ein Verfahren des zweiten 32 und des vierten Werkzeugs 34 erfolgen (Schritte m und o). Der erste 20 und der zweite Träger 30 befinden sich hierbei in der ersten Zwischenposition. In Abhängigkeit von den zu verschweißenden Bauteilen erfolgt nach dem Verfahren der jeweiligen Träger 20, 30 ein sogenannter Resthub, bei dem der Abstand zwischen dem ersten 20 und dem zweiten Träger 30 in einem kleinen Bereich verringert wird, um die jeweiligen Bauteile in Anlage zu bringen. Alternativ dazu verändern der erste 20 und der zweite Träger 30 ihre Position nach dem Verfahren der Werkzeuge 22, 26, 32, 34 relativ zum jeweiligen Träger 20, 30 nicht mehr. Dies dient jeweils zum Aufbringen der Schweißkraft.

Sobald das erste mit dem zweiten Bauteil und das dritte mit dem vierten Bauteil in Eingriff sind, erfolgt das Verschweißen der beiden Bauteile miteinander in Schritt c. Hierbei ist zu beachten, dass das Verschweißen mittels Reibschweißen bevorzugt erfolgt, wenn das zweite 32 und das vierte Werkzeug 34 starr am zweiten Träger 30 angeordnet sind. Andernfalls würden die auftretenden Reibschweißkräfte zu einer Beschädigung des zweiten 32 und/oder vierten Werkzeugs 34 führen. Daher ist die zusätzliche Beweglichkeit des zweiten 32 und des vierten Werkzeugs 34 nur bei Verwendung in einer Infrarot-Schweißvorrichtung sinnvoll.

Nach dem Verschweißen des ersten und des zweiten Bauteils sowie, wenn vorhanden, des dritten und des vierten Bauteils, werden der erste 20 und der zweite Träger 30 von der ersten Zwischenposition entlang der ersten z-Achse z₁ voneinander weg in die Ausgangsposition bewegt. In dieser Position kann der Bediener die miteinander verbundenen Bauteile nun einfach entnehmen. Die Entnahme erfolgt hierbei vorzugsweise aus den Werkzeugen 22, 26 am ersten Träger 20. Alternativ erfolgt die Entnahme aus den Werkzeugen 32, 34 am oberen Träger 30. Ebenso ist eine Kombination davon möglich.

### Bezugszeichenliste

- 1: Kunststoffschweißvorrichtung
- 3: Bauteil
- 5: Einbauteil
- 7: Vorsprung
- 10: Vorwärmvorrichtung
- 12: Infrarot-Strahler
- 20: erster Träger
- 22: erstes Werkzeug
- 24: erster Antrieb
- 26: drittes Werkzeug
- 28: dritter Antrieb
- 30: zweiter Träger
- 32: zweites Werkzeug
- 34: viertes Werkzeug
- 36: drittes Bauteil
- 38: Vorwärmanordnung
- 40: Hebelstruktur
- 42: erste Spiegelebene
- 44: zweite Spiegelebene

## Patentansprüche

1. Kunststoffschweißvorrichtung (1), umfassend:
a. ein erstes Werkzeug (22), das an einem ersten Träger (20) angeordnet ist, wobei das erste Werkzeug (22) ein Unterwerkzeug und der erste Träger (20) ein Hubtisch ist, und
b. ein zweites Werkzeug (32), das an einem zweiten Träger (30) angeordnet ist, der eine obere Befestigungsplatte ist, wobei
c. das erste Werkzeug (22) mittels eines ersten Antriebs (24) relativ zum ersten Träger (20) in eine erste Richtung (r₁) geradlinig zwischen einer ersten Position und einer zweiten Position bewegbar ist, während
d. ein Ursprung eines ersten gedachten Kugelkoordinatensystems in der ersten Position angeordnet ist, wobei sich die z-Achse als eine erste z-Achse (z₁) in Richtung des zweiten Trägers (30) erstreckt, **dadurch gekennzeichnet, dass**
e. für einen ersten Neigungswinkel (υ₁) zwischen der in Richtung des zweiten Trägers (30) positiven ersten z-Achse (z₁) und der ersten Richtung (r₁) 0 < υ₁ < π/2 gilt, wodurch das erste Werkzeug (22) in der ersten Position benachbart dem ersten Träger (20) angeordnet ist und in der zweiten Position einen Abstand zum ersten Träger (20) aufweist, der größer ist als der Abstand in der ersten Position, und ein erstes Bauteil am ersten Werkzeug (22) mit einem zweiten Bauteil am zweiten Werkzeug (32) in Eingriff bringbar ist.

2. Kunststoffschweißvorrichtung (1) gemäß Patentanspruch 1, wobei die Kunststoffschweißvorrichtung (1) eine Reibschweißvorrichtung mit Vorwärmanordnung oder eine Infrarot-Schweißvorrichtung ist.

3. Kunststoffschweißvorrichtung (1) gemäß einem der vorhergehenden Patentansprüche, wobei der erste (20) und der zweite Träger (30) relativ zueinander entlang der ersten z-Achse (z₁) bewegbar sind.

4. Kunststoffschweißvorrichtung (1) gemäß einem der vorhergehenden Patentansprüche, wobei der mindestens eine erste Antrieb (24) an einem ersten Ende mit dem ersten Träger (20) verbunden ist und mit einem zweiten Ende mit einer Hebestruktur (40) des ersten Werkzeugs (22).

5. Kunststoffschweißvorrichtung (1) gemäß einem der vorhergehenden Patentansprüche, bei der das zweite Werkzeug (32) mittels eines zweiten Antriebs relativ zum zweiten Träger (30) in eine zweite Richtung (r₂) geradlinig zwischen einer ersten Position und einer zweiten Position bewegbar ist, wobei
ein Ursprung eines zweiten gedachten Kugelkoordinatensystems in der ersten Position angeordnet ist, während sich die z-Achse als eine zweite z-Achse (z₂) in Richtung des ersten Trägers (20) erstreckt, und
für einen zweiten Neigungswinkel (υ₂) zwischen der in Richtung des ersten Trägers (20) positiven zweiten z-Achse (z₂) und der zweiten Richtung (r₂) 0 ≤ υ₂ ≤ π/2 gilt, wodurch ein erstes Bauteil am ersten Werkzeug (22) mit einem zweiten Bauteil am zweiten Werkzeug (32) in Eingriff bringbar ist.

6. Kunststoffschweißvorrichtung (1) gemäß Patentanspruch 5, die eine Infrarot-Schweißvorrichtung ist.

7. Kunststoffschweißvorrichtung (1) gemäß einem der vorhergehenden Patentansprüche, die weiterhin ein drittes Werkzeug (26), das am ersten Träger (20) angeordnet ist, sowie ein viertes Werkzeug (34) aufweist, das am zweiten Träger (30) angeordnet ist, wobei
das dritte Werkzeug (26) mittels eines dritten Antriebs relativ zum ersten Träger (20) in eine dritte Richtung (r₃) geradlinig zwischen einer ersten Position und einer zweiten Position bewegbar ist und
die dritte Richtung (r₃) eine Spiegelung der ersten Richtung (r₁) an einer ersten Spiegelebene (42) zwischen dem ersten (22) und dem dritten Werkzeug (26) ist, so dass für einen ersten gespiegelten Neigungswinkel (υ_{1S}) zwischen der gespiegelten ersten z-Achse (z_{1S}) und der dritten Richtung (r₃) bezogen auf den ersten Neigungswinkel (υ₁) gilt: υ_{1S} = υ₁.

8. Kunststoffschweißvorrichtung (1) gemäß Patentanspruch 7, wobei
das vierte Werkzeug (34) mittels eines vierten Antriebs relativ zum zweiten Träger (30) in eine vierte Richtung (r₄) geradlinig zwischen einer ersten Position und einer zweiten Position bewegbar ist und
die vierte Richtung (r₄) eine Spiegelung der zweiten Richtung (r₂) an einer zweiten Spiegelebene (44) zwischen dem zweiten (32) und dem vierten Werkzeug (34) ist, so dass für einen zweiten gespiegelten Neigungswinkel (υ_{2S}) zwischen der gespiegelten zweiten z-Achse (z_{2S}) und der vierten Richtung (r₄) bezogen auf den zweiten Neigungswinkel (υ₂) gilt: υ_{2S} = υ₂.

9. Kunststoffschweißverfahren mittels einer Kunststoffschweißvorrichtung (1) gemäß einem der Patentansprüche 1 bis 8, das die folgenden Schritte aufweist:
a. Anordnen eines ersten Bauteils auf einem ersten Werkzeug (22), das ein Unterwerkzeug ist, auf einem ersten Träger (20) der Kunststoffschweißvorrichtung (1) angeordnet ist und zwischen einer ersten Position und einer zweiten Position bewegbar ist, wobei ein Ursprung eines ersten gedachten Kugelkoordinatensystems am ersten Werkzeug (22) in der ersten Position angeordnet ist, während sich die z-Achse als eine erste z-Achse (z₁) in Richtung eines zweiten Trägers (30) mit einem daran angeordneten zweiten Werkzeug (32) erstreckt, danach
b. Verfahren des ersten Werkzeugs (22) mittels eines ersten Antriebs (24) relativ zum ersten Träger (20) geradlinig entlang einer ersten Richtung (r₁) von der ersten Position in die zweite Position, wobei das erste Werkzeug (22) in der ersten Position benachbart dem ersten Träger (20) angeordnet ist und in der zweiten Position einen Abstand zum ersten Träger (20) aufweist, der größer ist als der Abstand in der ersten Position, während für einen ersten Neigungswinkel (υ₁) zwischen der ersten Achse (z₁) und der ersten Richtung (r₁) 0 < υ₁ < π/2 gilt, anschließend
c. Verschweißen des ersten und eines zweiten Bauteils miteinander.

10. Kunststoffschweißverfahren gemäß Patentanspruch 9, das die weiteren Schritte aufweist:
d. Verfahren des ersten (20) und des zweiten Trägers (30) von einer Ausgangsposition entlang der ersten z-Achse (z₁) aufeinander zu in eine erste Zwischenposition vor Schritt b., und
e. Verfahren des ersten (20) und des zweiten Trägers (30) von der ersten Zwischenposition entlang der ersten z-Achse (z₁) voneinander weg in die Ausgangsposition nach Schritt c.

11. Kunststoffschweißverfahren gemäß einem der Patentansprüche 9 oder 10, das vor Schritt b. die weiteren Schritte umfasst:
f. Anordnen des zweiten Bauteils auf dem ersten Bauteil im ersten Werkzeug (22),
g. Verfahren des ersten Werkzeugs (22) von der ersten Position in die zweite Position, danach
h. Übergeben des zweiten Bauteils an das zweite Werkzeug (32), anschließend
i. Verfahren des ersten Werkzeugs (22) von der zweiten Position in die erste Position.

12. Kunststoffschweißverfahren gemäß einem der Patentansprüche 9 bis 11, das vor Schritt b. weiterhin die Schritte aufweist:
j. Anordnen einer Vorwärmanordnung (38) zwischen dem ersten (22) und dem zweiten Werkzeug (32) benachbart dem ersten und dem zweiten Bauteil,
k. Vorwärmen des ersten und des zweiten Bauteils in den zu verschweißenden Bereichen,
1. Entfernen der Vorwärmanordnung (38) zwischen dem ersten (22) und dem zweiten Werkzeug (32).

13. Kunststoffschweißverfahren gemäß einem der Patentansprüche 9 bis 12, wobei ein Ursprung eines zweiten gedachten Kugelkoordinatensystems am zweiten Werkzeug (32) in einer ersten Position angeordnet ist, während sich eine zweite z-Achse (z₂) in Richtung des ersten Trägers (20) erstreckt, und das Verfahren den weiteren Schritt aufweist:
m. Verfahren des zweiten Werkzeugs (32) mittels eines zweiten Antriebs relativ zum zweiten Träger (30) geradlinig in eine zweite Richtung (r₂) zwischen einer ersten Position und einer zweiten Position, wobei für einen zweiten Neigungswinkel (υ₂) zwischen der in Richtung des ersten Trägers (20) positiven zweiten z-Achse (z₂) und der zweiten Richtung (r₂) 0 < υ₂ < π/2 gilt, wodurch ein erstes Bauteil im ersten Werkzeug (22) mit einem zweiten Bauteil im zweiten Werkzeug (32) in Eingriff bringbar ist

14. Kunststoffschweißverfahren gemäß einem der Patentansprüche 9 bis 13, das weiterhin ein drittes (26) und ein viertes Werkzeug (34) aufweist, wobei das dritte Werkzeug (26) am ersten Träger (20) und das vierte Werkzeug (34) am zweiten Träger (30) angeordnet ist, und das den weiteren Schritt aufweist:
n. Verfahren des dritten Werkzeugs (26) mittels eines dritten Antriebs relativ zum ersten Träger (20) entlang einer dritten Richtung (r₃) von einer ersten Position in eine zweite Position, wobei die dritte Richtung (r₃) einer Spiegelung der ersten Richtung (r₁) an einer ersten Spiegelebene (42) zwischen dem ersten (22) und dem dritten Werkzeug (26) entspricht.

15. Kunststoffschweißverfahren gemäß Patentanspruch 14 in Verbindung mit Patentanspruch 13, mit dem weiteren Schritt:
o. Verfahren des vierten Werkzeugs (34) mittels eines vierten Antriebs relativ zum zweiten Träger (30) entlang einer vierten Richtung (r₄) von einer ersten Position in eine zweite Position, wobei die vierte Richtung (r₄) einer Spiegelung der zweiten Richtung (r₂) an einer zweiten Spiegelebene (44) zwischen dem zweiten (32) und dem vierten Werkzeug (34) entspricht.

## Claims

1. A plastic welding device (1), comprising:
a. a first tool (22) which is arranged at a first support (20), wherein the first tool (22) is a lower tool and the first support (20) is a lifting table and
b. a second tool (32) which is arranged at a second support (30) which is an upper fastening plate, wherein
c. the first tool (22) is movable by means of a first drive (24) with respect to the first support (20) in a first direction (r₁) linearly between a first position and a second position, wherein
d. an origin of a first imaginary spherical coordinate system is arranged in the first position, wherein the z-axis as a first z-axis (z₁) extends in the direction of the second support (30), **characterized in that**
e. for a first inclination angle (υ₁) between the first z-axis (z₁) which is positive in the direction of the second support (30) and the first direction (r₁) it applies 0 < υ₁ < π/2, whereby the first tool (22) is arranged in the first position adjacent to the first support (20) and in the second position it has a distance to the first support (20) which is larger than the distance in the first position, and a first component at the first tool (22) can be brought into engagement with a second component at the second tool (32).

2. The plastic welding device (1) according to claim 1, wherein the plastic welding device (1) is a friction welding device with preheating arrangement or an infrared welding device.

3. The plastic welding device (1) according to one of the preceding claims, wherein the first (20) and the second support (30) are movable with respect to each other along the first z-axis (z₁).

4. The plastic welding device (1) according to one of the preceding claims, wherein the at least one first drive (24) is connected at a first end to the first support (20) and with a second end to a lifting structure (40) of the first tool (22).

5. The plastic welding device (1) according to one of the preceding claims, in which the second tool (32) is movable by means of a second drive with respect to the second support (30) in a second direction (r₂) linearly between a first position and a second position, wherein
an origin of a second imaginary spherical coordinate system is arranged in the first position, wherein the z-axis as a second z-axis (z₂) extends in the direction of the first support (20), and
for a second inclination angle (υ₂) between the second z-axis (z₂) which is positive in the direction of the first support (20) and the second direction (r₂) it applies 0 ≤ υ₂ ≤ π/2, whereby a first component at the first tool (22) can be brought into engagement with a second component at the second tool (32).

6. The plastic welding device (1) according to claim 5, which is an infrared welding device.

7. The plastic welding device (1) according to one of the preceding claims, which further comprises a third tool (26) which is arranged at the first support (20), as well as a fourth tool (34) which is arranged at the second support (30), wherein
the third tool (26) is movable by means of a third drive with respect to the first support (20) in a third direction (r₃) linearly between a first position and a second position and the third direction (r₃) is a mirroring of the first direction (r₁) at a first mirrored plane (42) between the first (22) and the third tool (26) so that for a first mirrored inclination angle (υ_{1S}) between the mirrored first z-axis (z_{1S}) and the third direction (r₃) with respect to the first inclination angle (υ₁) it applies: υ_{1S} = υ₁.

8. Plastic welding device (1) according to claim 7, wherein the fourth tool (34) is movable by means of a fourth drive with respect to the second support (30) in a fourth direction (r₄) linearly between a first position and a second position and
the fourth direction (r₄) is a mirroring of the second direction (r₂) at a second mirror plane (44) between the second (32) and the fourth tool (34) so that for a second mirrored inclination angle (υ_{2S}) between the mirrored second z-axis (z_{2S}) and the fourth direction (r₄) with respect to the second inclination angle (υ₂) it applies: υ_{2S} = υ₂.

9. A plastic welding method by means of a plastic welding device (1) according to one of the claims 1 to 8, which comprises the following steps:
a. arranging a first component on a first tool (22), which is a lower tool, which is arranged on a first support (20) of a plastic welding device (1) and which is movable between a first position and a second position, wherein an origin of a first imaginary spherical coordinate system is arranged at the first tool (22) in the first position, wherein the z-axis as a first z-axis (z₁) extends in the direction of the second support (30) with a second tool (32) arranged thereon, thereafter
b. moving the first tool (22) by means of a first drive (24) with respect to the first support (20) linearly along a first direction (r₁) from the first position into the second position, wherein the first tool (22) is arranged in the first position adjacent to the first support (20) and in the second position it has a distance to the first support (20) which is larger than the distance in the first position, wherein for a first inclination angle (υ₁) between the first z-axis (z₁) and the first direction (r₁) it applies 0 < υ₁ < π/2, subsequently
c. welding of the first and a second component to each other.

10. The plastic welding method according to claim 9, which comprises the further steps:
d. moving the first (20) and the second support (30) from an initial position along the first z-axis (z₁) towards each other into a first intermediate position before step b., and
e. moving the first (20) and the second support (30) from the first intermediate position along the first z-axis (z₁) away from each other into the initial position after step c.

11. The plastic welding method according to one of the claims 9 or 10, which comprises before step b. the further steps:
f. arranging the second component on the first component in the first tool (22),
g. moving the first tool (22) from the first position into the second position, thereafter
h. transferring the second component to the second tool (32), subsequently
i. moving the first tool (22) from the second position into the first position.

12. The plastic welding method according to one of the claims 9 to 11, which comprises before step b. further the steps:
j. arranging a preheating arrangement (38) between the first (22) and the second tool (32) adjacent to the first and the second component,
k. preheating the first and the second component in the portions to be welded,
1. removing the preheating arrangement (38) between the first (22) and the second tool (32).

13. The plastic welding method according to one of the claims 9 to 12, wherein an origin of a second imaginary spherical coordinate system is arranged at the second tool (32) in a first position, wherein a second z-axis (z₂) extends in the direction of the first support (20), and the method comprises the further step:
m. moving the second tool (32) by means of a second drive with respect to the second support (30) linearly in a second direction (r₂) between a first position and a second position, wherein for a second inclination angle (υ₂) between the second z-axis (z₂) which is positive in the direction of the first support (20) and the second direction (r₂) it applies 0 < υ₂ < π/2, whereby a first component in the first tool (22) can be brought into engagement with a second component in the second tool (32).

14. The plastic welding method according to one of the claims 9 to 13, which comprises further a third (26) and a fourth tool (34), wherein the third tool (26) is arranged at the first support (20) and the fourth tool (34) is arranged at the second support (30), and which comprises the further step:
n. moving the third tool (26) by means of a third drive with respect to the first support (20) along a third direction (r₃) from a first position into a second position, wherein the third direction (r₃) corresponds to a mirroring of the first direction (r₁) at a first mirror plane (42) between the first (22) and the third tool (26).

15. The plastic welding method according to claim 14 in connection with claim 13, which comprises the further step:
o. moving the fourth tool (34) by means of a fourth drive with respect to the second support (30) along a fourth direction (r₄) from a first position into a second position, wherein the fourth direction (r₄) is a mirroring of the second direction (r₂) at a second mirror plane (44) between the second (32) and the fourth tool (34).

## Revendications

1. Dispositif de soudage de matière synthétique (1) comportant :
a. un premier outil (22) disposé sur un premier support (20), le premier outil (22) étant un outil inférieur et le premier support (20) étant une table élévatrice, et
b. un deuxième outil (32) disposé sur un deuxième support (30) consistant en une plaque de fixation supérieure, dans lequel
c. le premier outil (22) est déplaçable linéairement par rapport au premier support (20) dans une première direction (r₁) entre une première position et une deuxième position au moyen d'un premier entraînement (24), tandis que
d. une origine d'un premier système de coordonnées sphérique imaginaire est disposée à la première position, dans lequel l'axe z s'étend en tant que premier axe z (z₁) dans la direction du deuxième support (30), **caractérisé en ce que**
e. 0 < υ₁ < π/2 s'applique à un premier angle d'inclinaison (υ₁) entre le premier axe z (z₁) positif dans la direction du deuxième support (30) et la première direction (r₁), moyennant quoi le premier outil (22) est disposé à côté du premier support (20) dans la première position et présente un écart par rapport au premier support (20) dans la deuxième position, lequel est supérieur à l'écart dans la première position, et un premier composant sur le premier outil (22) peut être mis en contact avec un deuxième composant sur le deuxième outil (32).

2. Dispositif de soudage de matière synthétique (1) selon la revendication 1, dans lequel le dispositif de soudage de matière synthétique (1) est un dispositif de soudage par friction avec un ensemble de préchauffage ou un dispositif de soudage infrarouge.

3. Dispositif de soudage de matière synthétique (1) selon l'une des revendications précédentes, dans lequel le premier (20) et le deuxième support (30) sont déplaçables l'un par rapport à l'autre le long du premier axe z (z₁).

4. Dispositif de soudage de matière synthétique (1) selon l'une des revendications précédentes, dans lequel l'au moins un premier entraînement (24) est relié au premier support (20) à une première extrémité et à une structure de levage (40) du premier outil (22) par une deuxième extrémité.

5. Dispositif de soudage de matière synthétique (1) selon l'une des revendications précédentes, dans lequel le deuxième outil (32) est déplaçable linéairement par rapport au deuxième support (30) dans une deuxième direction (r₂) entre une première position et une deuxième position au moyen d'un deuxième entraînement, dans lequel
- une origine d'un deuxième système de coordonnées sphérique imaginaire est disposée à la première position, tandis que l'axe z s'étend en tant que deuxième axe z (z₂) dans la direction du premier support (20), et
- 0 ≤ υ₂ ≤ π/2 s'applique à un deuxième angle d'inclinaison (υ₂) entre le deuxième axe z (z₂) positif dans la direction du premier support (20) et la deuxième direction (r₂), moyennant quoi un premier composant sur le premier outil (22) peut venir en contact avec un deuxième composant sur le deuxième outil (32).

6. Dispositif de soudage de matière synthétique (1) selon la revendication 5, consistant en un dispositif de soudage infrarouge.

7. Dispositif de soudage de matière synthétique (1) selon l'une des revendications précédentes, présentant en outre un troisième outil (26) disposé sur le premier support (20), ainsi qu'un quatrième outil (34) disposé sur le deuxième support (30), dans lequel
- le troisième outil (26) est déplaçable linéairement par rapport au premier support (20) dans une troisième direction (r₃) entre une première position et une deuxième position au moyen d'un troisième entraînement, et
- la troisième direction (r₃) est une réflexion de la première direction (r₁) sur un premier plan de réflexion (42) entre le premier (22) et le troisième outil (26), de sorte que υ_{1S} = υ₁ s'applique à un premier angle d'inclinaison réfléchi (υ_{1S}) entre le premier axe z réfléchi (z_{1S}) et la troisième direction (r₃), rapporté au premier angle d'inclinaison (υ₁).

8. Dispositif de soudage de matière synthétique (1) selon la revendication 7, dans lequel
- le quatrième outil (34) est déplaçable linéairement par rapport au deuxième support (30) dans une quatrième direction (r₄) entre une première position et une deuxième position au moyen d'un quatrième entraînement, et
- la quatrième direction (r₄) est une réflexion de la deuxième direction (r₂) sur un deuxième plan de réflexion (44) entre le deuxième (32) et le quatrième outil (34), de sorte que υ_{2S} = υ₂ s'applique à un deuxième angle d'inclinaison réfléchi (υ_{2S}) entre le deuxième axe z réfléchi (z_{2S}) et la quatrième direction (r₄), rapporté au deuxième angle d'inclinaison (υ₂).

9. Procédé de soudage de matière synthétique au moyen d'un dispositif de soudage de matière synthétique (1) selon l'une des revendications 1 à 8, présentant les étapes suivantes :
a. agencement d'un premier composant sur un premier outil (22), lequel est un outil inférieur, disposé sur un premier support (20) du dispositif de soudage de matière synthétique (1) et déplaçable entre une première position et une deuxième position, sachant qu'une origine d'un premier système de coordonnées sphérique imaginaire est disposée sur le premier outil (22) à la première position, tandis que l'axe z s'étend en tant que premier axe z (z₁) dans la direction d'un deuxième support (30) avec un deuxième outil (32) disposé sur celui-ci, puis
b. déplacement du premier outil (22) linéairement par rapport au premier support (20) le long d'une première direction (r₁) de la première position à la deuxième position au moyen d'un premier entraînement (24), sachant que le premier outil (22) est disposé à côté du premier support (20) dans la première position et présente un écart par rapport au premier support (20) dans la deuxième position, lequel est supérieur à l'écart dans la première position, tandis que 0 < υ₁ < π/2 s'applique à un premier angle d'inclinaison (υ₁) entre le premier axe (z₁) et la première direction (r₁), puis
c. soudage du premier et d'un deuxième composant entre eux.

10. Procédé de soudage de matière synthétique selon la revendication 9, présentant les étapes supplémentaires suivantes :
d. déplacement du premier (20) et du deuxième support (30) à partir d'une position de départ le long du premier axe z (z₁) l'un vers l'autre jusqu'à une première position intermédiaire avant l'étape b, et
e. déplacement du premier (20) et du deuxième support (30) à partir de la première position intermédiaire le long du premier axe z (z₁) l'un à distance de l'autre jusqu'à la position de départ après l'étape c.

11. Procédé de soudage de matière synthétique selon l'une des revendications 9 et 10, comportant les étapes supplémentaires suivantes avant l'étape b :
f. agencement du deuxième composant sur le premier composant dans le premier outil (22),
g. déplacement du premier outil (22) de la première position à la deuxième position, puis
h. transfert du deuxième composant au deuxième outil (32), puis
i. déplacement du premier outil (22) de la deuxième position à la première position.

12. Procédé de soudage de matière synthétique selon l'une des revendications 9 à 11, présentant en outre les étapes suivantes avant l'étape b :
j. agencement d'un ensemble de préchauffage (38) entre le premier (22) et le deuxième outil (32) à côté du premier et du deuxième composant,
k. préchauffage du premier et du deuxième composant dans les régions destinées au soudage,
1. retrait de l'ensemble de préchauffage (38) entre le premier (22) et le deuxième outil (32).

13. Procédé de soudage de matière synthétique selon l'une des revendications 9 à 12, dans lequel une origine d'un deuxième système de coordonnées sphérique imaginaire est disposée sur le deuxième outil (32) à une première position, tandis qu'un deuxième axe z (z₂) s'étend dans la direction du premier support (20), et le procédé présente l'étape supplémentaire suivante :
m. déplacement du deuxième outil (32) linéairement par rapport au deuxième support (30) dans une deuxième direction (r₂) entre une première position et une deuxième position au moyen d'un deuxième entraînement, où 0 ≤ υ₂ ≤ π/2 s'applique à un deuxième angle d'inclinaison (υ₂) entre le deuxième axe z (z₂) positif dans la direction du premier support (20) et la deuxième direction (r₂), moyennant quoi un premier composant dans le premier outil (22) peut être mis en contact avec un deuxième composant dans le deuxième outil (32).

14. Procédé de soudage de matière synthétique selon l'une des revendications 9 à 13, présentant en outre un troisième (26) et un quatrième outil (34), dans lequel le troisième outil (26) est disposé sur le premier support (20) et le quatrième outil (34) est disposé sur le deuxième support (30), et présentant l'étape supplémentaire suivante :
n. déplacement du troisième outil (26) par rapport au premier support (20) le long d'une troisième direction (r₃) d'une première position vers une deuxième position au moyen d'un troisième entraînement, la troisième direction (r₃) correspondant à une réflexion de la première direction (r₁) sur un premier plan de réflexion (42) entre le premier (22) et le troisième outil (26).

15. Procédé de soudage de matière synthétique selon la revendication 14 en relation avec la revendication 13, comprenant l'étape supplémentaire suivante :
o. déplacement du quatrième outil (34) par rapport au deuxième support (30) le long d'une quatrième direction (r₄) d'une première position vers une deuxième position au moyen d'un quatrième entraînement, la quatrième direction (r₄) correspondant à une réflexion de la deuxième direction (r₂) sur un deuxième plan de réflexion (44) entre le deuxième (32) et le quatrième outil (34).
